# EUROPÄISCHE PATENTSCHRIFT

(11) **EP 2 812 374 B1**
(45) Veröffentlichungstag und Bekanntmachung des Hinweises auf die Patenterteilung: **28.09.2016**
(21) Anmeldenummer: 12788502.8
(22) Anmeldetag: 15.11.2012
(51) Int. Cl.: C08G 77/54, B22C 1/20, C08G 18/54, B22C 1/22, C08K 5/54, C08K 5/42, C08K 5/51

(54) **COLD-BOX-BINDEMITTELSYSTEME UND MISCHUNGEN ZUR VERWENDUNG ALS ADDITIVE FÜR SOLCHE BINDEMITTELSYSTEME**
COLD-BOX-BINDER SYSTEMS AND MIXTURES FOR USE AS ADDITIVES FOR SUCH SYSTEMS
SYSTÈMES LIANTS EN BOÎTE-FROIDE ET MÉLANGES POUR UTILISATION COMME ADDITIFS POUR DE TELS SYSTÈMES

(30) Priorität: 09.02.2012 DE 102012201971; 27.02.2012 US 201261603660 P
(43) Veröffentlichungstag der Anmeldung: 17.12.2014
(73) Patentinhaber: Hüttenes-Albertus Chemische Werke GmbH, 40549 Düsseldorf (DE)
(72) Erfinder: LADEGOURDIE, Gerard, 40237 Düsseldorf (DE); DOERSCHEL, Markus, 50737 Köln (DE); WICHMANN, Ursula, 56154 Boppard (DE); SERGHINI ANBARI, Amine, 47506 Neukirchen-Vluyn (DE); STRUNK, David, 41462 Neuss (DE)
(74) Vertreter: Eisenführ Speiser
(86) Internationale Anmeldenummer: PCT/EP2012/072705
(87) Internationale Veröffentlichungsnummer: WO 2013/117256

(56) Entgegenhaltungen:
- EP-A2- 0 153 273
- EP-A2- 1 057 554
- WO-A1-00/22052
- US-A1- 2009 093 567

## Beschreibung

Die Erfindung betrifft eine Mischung herstellbar durch Umsetzen lassen einer Vormischung von (av) Methansulfonsäure, (bv) einem oder mehreren Estern von einer oder mehreren Phosphor-Sauerstoff-Säuren und (cv) einem oder mehreren Silanen. Die Erfindung betrifft zudem die Verwendung besagter Mischungen als Additiv für die Polyisocyanat-Komponente eines Zwei-Komponenten-Bindemittelsystems zur Herstellung eines Polyurethan-Harzes. Ferner betrifft die Erfindung eine Polyisocyanat enthaltende Lösung zur Verwendung als Komponente eines Formstoff-Bindemittelsystems, sowie die Verwendung einer Polyisocyanat enthaltenden Lösung als Polyisocyanat-Komponente eines Zwei-Komponenten-Bindemittelsystems zur Herstellung eines Polyurethan-Harzes und entsprechende Zwei-Komponenten-Bindemittelsysteme zur Herstellung eines Polyurethan-Harzes. Ebenfalls betrifft die Erfindung die Verwendung einer Polyisocyanat enthaltenden Lösung und eines Zwei-Komponenten-Bindemittelsystems zur Herstellung von Gießerei-Sandkernen oder -formen nach dem Cold-Box-Verfahren und/oder zur Herstellung eines Polyurethan-Harzes vorzugsweise im Polyurethan-Cold-Box-Verfahren sowie Gemische zur Herstellung eines Kerns oder einer Form für die Gießerei und Formen oder Kerne für die Gießerei. Ferner betrifft die Erfindung ein Verfahren zur Herstellung eines Kerns oder einer Form für die Gießerei.

Bei der Herstellung von Gießerei-Sandkernen und -formen haben die unter Polyurethanbildung kalthärtenden Bindemittelsysteme eine große Bedeutung. Diese Bindemittelsysteme bestehen aus zwei Komponenten, einem (normalerweise in einem Lösungsmittel gelösten) Polyol mit mindestens zwei OH-Gruppen im Molekül und einem (meistens ebenfalls in einem Lösungsmittel gelösten) Polyisocyanat mit mindestens zwei Isocyanat-Gruppen im Molekül. Die beiden Komponenten, werden üblicherweise mit einem Formgrundstoff vermischt, vorzugsweise Sand, in dem Gemisch reagieren die Komponenten zu einem ausgehärteten Polyurethan-Bindemittel, und zwar typischerweise in Gegenwart von Katalysatoren, welche eine schnelle Umsetzung und damit eine hinreichend kurze Aushärtungszeit gewährleisten. Als Katalysatoren kommen dabei neben anderen Stoffen wie metallorganischen Verbindungen vorwiegend tertiäre Amine in Betracht, die nach dem Formen des den Formgrundstoff umfassenden Gemischs mit einem Trägergas in das Formwerkzeug eingeführt werden.

Die Polyol-Komponente ist üblicherweise ein in einem Lösungsmittel gelöstes Kondensationsprodukt von (ggfs. substituierten) Phenolen mit Aldehyden (nachfolgend kurz "Phenolharz" genannt), das einen geringen bis mittleren Kondensationsgrad besitzt und eine größere Anzahl von freien OH-Gruppen im Molekül aufweist. In bestimmten Fällen, insbesondere bei Sandkernen für niedrigere Gießtemperaturen, kann die Polyol-Komponente aber auch eine Lösung eines oligomeren, dimeren oder monomeren Phenolkörpers sein, z. B. eines Terphenols, Bisphenols oder Dihydroxybenzols. Für alle diese Polyole steht eine große Anzahl von (im Allgemeinen polaren) Lösungsmitteln zur Verfügung. Die Lösungen werden normalerweise auf eine Konzentration von 40 - 95 Gew.-% der Polyol-Komponente eingestellt und können übliche Zusätze enthalten.

Zur Verwendung in der Polyisocyanat-Komponente kommen Polyisocyanate mit mindestens zwei Isocyanat-Gruppen im Molekül in Betracht. Bevorzugt sind aromatische Polyisocyanate, für die Diphenylmethan-4,4'-diisocyanat (MDI), 2,2',6,6'-Tetramethyidiphenyimethan-4,4'-diisocyanat, Diphenyldimethylmethan-4,4'-diisocyanat und Diphenyl-4,4'-diisocyanat als typische Beispiele genannt seien. Weitere geeignete Polyisocyanate sind beispielsweise in EP 1057554 A2 offenbart. Die Polyisocyanate können entweder in reiner Form oder aber gelöst in einem Lösungsmittel, z. B. einem Gemisch aromatischer Kohlenwasserstoffe mit einem Siedebereich oberhalb 150 °C oder einem fettsäuremethylesterhaltigen Lösungsmittel oder einem tetraalkylsilikathaltigen Lösungsmittel, die Polyisocyanat-Komponente bilden. Im Falle einer Lösung liegt die Konzentration des Polyisocyanats im Allgemeinen oberhalb von 60 Gew-%.

Zur Herstellung eines Gemisches zur Herstellung eines Kerns oder einer Form für die Gießerei wird ein Formgrundstoff, vorzugsweise ein körniger Formsand wie Quarzsand, Chromitsand, Olivinsand, Zirkonsand, mit den beiden Bindemittel-Komponenten vermischt, wobei die Mengenverhältnisse der beiden Komponenten etwa im Bereich von 0,5 bis 1,5 Gewichtsteilen Polyisocyanat-Komponente auf 1 Gewichtsteil Polyol-Komponente liegen können und vorzugsweise so bemessen sind, dass sich ein nahezu stöchiometrisches Verhältnis der Isocyanat-Gruppen zu den OH-Gruppen ergibt. Ein solches Gemisch wird sodann zu Gießerei-Sandkernen bzw. -formen verarbeitet, z.B. indem es in ein Formwerkzeug gefüllt oder geschossen, gegebenenfalls verdichtet und danach durch kurzzeitige Begasung mit einem leicht flüchtigen tertiären Amin wie Triethyl-, Dimethylethyl-, Dimethyl-n-Propyl- oder Dimethylisopropylamin ausgehärtet wird. Anschließend können die Sandkerne bzw. -formen dem Formwerkzeug entnommen werden.

Die Sandkerne bzw. -formen erhalten bereits während der Begasung eine messbare Festigkeit ("Anfangsfestigkeit"), die sich nach Beendigung der Begasung noch weiter auf die Endfestigkeitswerte erhöht. In der Gießereipraxis werden dabei möglichst hohe Anfangsfestigkeiten gewünscht, damit die Sandkerne bzw. -formen möglichst sofort nach der Begasung dem Formwerkzeug entnommen werden können und das Werkzeug wieder für einen neuen Arbeitsgang zur Verfügung steht.

Solche ausreichend hohen Anfangsfestigkeiten lassen sich mit schnell aushärtenden Bindemittelsystemen erreichen. Eine hierfür erforderliche starke Reaktivität des Systems hat aber zur Folge, dass sich die Zeitdauer, während der das Gemisch aus den beiden Bindemittel-Komponenten und dem Formgrundstoff vor der Weiterverarbeitung zu Sandkernen bzw. -formen gelagert werden kann (sog. "Sandlebenszeit"), deutlich verringert. Dies ist ein erheblicher Nachteil, denn die Praxis verlangt auch ausreichende Sandlebenszeiten, damit eine vorbereitete Charge einer Formstoffmischung (Formsandmischung) nicht vorzeitig unbrauchbar wird. Vor allem angesichts warmer Außentemperaturen, wie sie z.B. in gemäßigten Klimazonen im Sommer oder in Tropen- und Subtropenländern ganzjährig üblich sind, ist die Verlängerung bzw. Einstellung der Sandlebzeit eine große Herausforderung, da hohe Temperaturen die Reaktivität des Bindemittelsystems begünstigen. Gute Sandlebenszeiten ergeben sich mit weniger stark reaktiven Bindemittel-Systemen, die dann aber auch wieder zu schlechteren Anfangsfestigkeiten führen.

Um beide Forderungen nach möglichst hoher Anfangsfestigkeit und nach möglichst guter Sandlebenszeit erfüllen zu können, werden der Polyisocyanat-Komponente des Bindemittels bislang Säurechloride, z.B. Phosphorylchlorid, Phthaloylchlorid oder Chlorsilane, zugesetzt. DE-A-34 05 180 beschreibt ein derartiges, Chlorsilane enthaltendes Formstoff-Bindemittelsystem.

Säurechloride enthaltende Bindemittelsysteme sind aus US 4,540,724 bekannt.

Ein Anteil an Chlor im Bindemittelsystem kann jedoch zu Nachteilen und gesundheitlichen Risiken bei der Verarbeitung des Bindemittelsystems und beim nachfolgenden Metallguss führen, da bei einer Zersetzung des Bindemittelsystems chlorhaltige gesundheitsschädigende Verbindungen entstehen können. Beispielsweise zersetzt sich Phosphorylchlorid bei Anwesenheit von Wasser unter Bildung von stark ätzendem, phosphor- und salzsäurehaltigem Nebel. Bei der Inhalation von dampfförmigen Phosphorylchlorid findet die Zersetzung mit dem in der Lunge vorhandenem Wasser statt, dies kann zu ernsthaften Schäden der Gesundheit und zur Azidose führen.

Neben den gesundheitlichen Risiken bei der Verwendung von chlorhaltigen Bindemittelsystemen, führt die Verwendung von chlorhaltigen Bindemittelsystemen auch häufig zu einer Korrosion der hergestellten Gussteile (insbesondere bei Grauguss), die durch chlorhaltige Zersetzungsprodukte des Bindemittelsystems eingeleitet wird. Ein weiterer Nachteil bei der Verwendung von chlorhaltigen Bindemittelsystemen ist, dass bereits verwendete Sandkerne bzw. Formen häufig erst nach aufwendiger Aufarbeitung, bei der gesundheitsgefährdende chlorhaltende Chemikalien entfernt werden müssen, als Altsande wieder verwendet werden können. Es besteht daher Bedarf an einem Austauschstoff für Säurechloride bzw. Chlorsilane, der ebenfalls die Sandlebenszeit eines Formstoffes verlängern kann und dabei chlorfrei ist. Der Austauschstoff soll die bislang eingesetzten Säurechloride bzw. Chlorsilane ganz oder teilweise ersetzen können, ohne die Sandlebenszeit oder die Festigkeit der Sandkerne (Anfangsfestigkeit und Endfestigkeit) zu beeinträchtigen.

Neben den hohen Anforderungen an die Sandlebenszeit sowie die Anfangs- und Endfestigkeit der Sandkerne bzw. -formen, sind in der Gießereitechnik auch hohe Anforderungen an die Lagerstabilität der hergestellten Sandkerne bzw. -formen gestellt. In der Gießereipraxis werden die hergestellten Sandkerne bzw. -formen vor deren Verwendung im Gießprozess zwischengelagert. Dabei sind die Sandkerne bzw. -formen den in den Gießereien üblichen Umweltfaktoren wie z.B. hohen Temperaturen und Feuchtigkeit ausgesetzt. Vor allem geschlichtete Sandkerne bzw. -formen weisen üblicherweise einen recht hohen Wassergehalt auf. Eine unter Feuchtigkeit stattfindende Rückreaktion bzw. Zersetzungsreaktion der Polyurethan-Harze führt zu einer Verschlechterung der Qualität der hergestellten Sandkerne bzw. -formen. Im schlimmsten Fall kann dies dazu führen, dass die hergestellten Sandkerne bzw. -formen nach längerer Standzeit unbrauchbar geworden sind.

Um die Lagerstabilität der Sandkerne bzw. -formen zu erhöhen, werden dem Bindemittelsystem häufig Haftvermittler zugefügt, dadurch wird insbesondere das Festigkeitsverhalten wesentlich verbessert. Üblicherweise handelt es sich bei den verwendeten Haftvermittlern um Silane. Geeignete Silane sind beispielsweise Aminosilane, Epoxysilane, Mercaptosilane und Ureidosilane. Silane sind jedoch verhältnismäßig teuer und tragen wesentlich zu den Gesamtkosten an den hergestellten Bindemittelsystemen bei. Es besteht daher Bedarf, einen geeigneten Weg zu finden, um die Menge der verwendeten Silane zu senken, ohne dabei die Lagerstabilität der Sandkerne bzw. -formen zu verschlechtern.

Aufgrund einer zunehmenden Komplexität von Gussstücken wird die Vermeidung von Oberflächenfehlern am Gussstück auch immer wichtiger. Weil die Kerngeometrien immer filigraner und die Formen immer komplexer werden, steigen entsprechend die Anforderungen an die Formstoffe und insbesondere Bindemittelsysteme.

Aufgrund der thermischen Ausdehnung des im Formstoff enthaltenen Sandes durch die Gießhitze können Formen und Kerne aufreißen, so dass das flüssige Metall in die Form oder den Kern eindringt. Die daraus resultierenden Oberflächenfehler, z.B. Blattrippen, lassen sich nur schwer entfernen.

Bei der Pyrolyse von kunstharzgebundenen Formstoffen durch die Gießhitze entstehen Gase. Diese können ebenfalls zu Gussfehlern führen. In diesem Zusammenhang können verschiedene Ursachen, die zur Entstehung dieser als Gasfehler bezeichneten Gussfehler führen, unterschieden werden.

Einerseits können Gasfehler, wie von H.G. Levelink, F.P.M.A. Julien und H.C.J. de Man in Gießerei 67 (1980) 109 beschrieben, z.B. durch "exogene" Gase verursacht werden. Diese "exogenen Gase" entstehen hauptsächlich bei der Pyrolyse von organischen Bindemitteln beim Kontakt mit der Metallschmelze in der Form oder dem Kern. Diese Gase erzeugen einen Gasdruck in Form oder Kern, der, wenn er den metallostatischen Gegendruck übersteigt, zu Gasfehlern im Gussstück, zumeist in dessen oberem Bereich, führen kann. Diese Gasblasen haben in der Regel eine glatte innere Oberfläche.

Eine weitere Art von Gasfehlern wird z.B. von Gy. Nandori und J.Pal. Miskoloc sowie K. Peukert in Gießerei 83 (1996) 16 beschreiben. Hier handelt es sich um Gasblasen, die mit Schlackestellen vergesellschaftet auftreten. Als Ursache solcher Gas-Schlackefehler sind "exogene", d.h. aus Form/Kern und Formhohlraum kommende, und "endogene", d.h. aus der Schmelze kommende Gase anzusehen. Diese Gase reagieren teilweise mit der Schmelze, so dass oxidreiche Schlacken entstehen. Diese Schlacken bilden zusammen mit den verbliebenen Gasen Gasfehler.

An Stellen, an denen die Oberfläche eines Kernes oder einer Form nicht genügend gegen das Eindringen von Schmelze geschützt ist, entstehen zudem häufig Penetrationen. Die entsprechenden Fehler müssen aufwändig aus dem Gussstück entfernt werden.

Es besteht daher stetig der Bedarf an Bindemittelsystemen die eine hohe thermische Beständigkeit aufweisen und somit dazu beitragen, Oberflächenfehler am Gussstück zu verringern.

Der Erfindung lag daher insbesondere die Aufgabe zu Grunde, ein geeignetes Additiv für unter Polyurethanbildung kalthärtende Bindemittelsysteme zu finden, das einzelne oder sämtliche der oben erwähnten Probleme löst. Dabei sollte insbesondere eine ausreichend hohe Sandlebenszeit garantiert werden, ohne die Festigkeit der Sandkerne und - formen (Anfangs- und Endfestigkeit) in relevantem Maße zu beeinträchtigen. Zusätzlich sollte die thermische Beständigkeit des Bindemittelsystems verbessert und dadurch die Gussoberfläche der hergestellten Gussteile optimiert werden. Außerdem sollte die Feuchtigkeits- bzw. Wasserschlichtebeständigkeit verbessert oder zumindest im Vergleich zum Stand der Technik beibehalten werden.

DE 29 21 726 offenbart spezielle Emulsionen enthaltend Wasser, ein organisches Polyisocyanat, gegebenenfalls ein nichtionisches, oberflächenaktives Mittel als Emulgator, und eine Sulfonsäure. Die Sulfonsäure ist dabei eine Sulfonsäure der allgemeinen Formel R-(SO₃H)ₙ, in welcher n für eine ganze Zahl 1 oder 2 steht und R einen aromatischen Kohlenwasserstoffrest mit 6 bis 14 Kohlenstoff-Atomen, einen aliphatischen Kohlenwasserstoffrest mit 10 bis 18 Kohlenstoff-Atomen, einen cycloaliphatischen Kohlenwasserstoffrest mit 6 bis 15 Kohlenstoff-Atomen, einen araliphatischen Kohlenwasserstoffrest mit 7 bis 15 Kohlenstoff-Atomen oder einen alkaromatischen Kohlenwasserstoffrest mit 7 bis 24 Kohlenstoff-Atomen bedeutet.

DE 29 21 698 A1 offenbart ein selbsttrennend wirkendes, im wesentlichen wasserfreies Bindemittel auf Polyisocyanatbasis für die Herstellung von Presskörpern bestehend aus
A) einem Polyisocyanat und
B) einer Sulfonsäure der allgemeinen Formel R-(SO₃H)ₙ, in welcher
   n für eine ganze Zahl 1 oder 2 steht und
   R einen aromatischen Kohlenwasserstoffrest mit 6 bis 14 Kohlenstoff-Atomen, einen aliphatischen Kohlenwasserstoffrest mit 10 bis 18 Kohlenstoff-Atomen, einen cycloaliphatischen Kohlenwasserstoffrest mit 6 bis 15 Kohlenstoff-Atomen, einen araliphatischen Kohlenwasserstoffrest mit 7 bis 15 Kohlenstoff-Atomen oder einen alkaromatischen Kohlenwasserstoffrest mit 7 bis 24 Kohlenstoff-Atomen bedeutet,
wobei das Äquivalentverhältnis der Komponenten A) und B) zwischen 100:0,5 und 100: 20 liegt.

JP 03-041116 betrifft bestimmte Polyurethanharz-Zusammensetzungen für orthopädische Gussbänder umfassend ein Polyurethanprepolymer umfassend ein Polyol und ein Polyisocyanat, einen Katalysator, einen Stabilisator (z.B. Säurechloride wie Benzoylchlorid oder Sulfonsäuren wie Methansulfonsäure) und eine Esterverbindung von Polyethylenglycol.

DE 42 15 873 beschreibt die Verwendung von bei Raumtemperatur flüssigen Estern als Lösungsmittel für Isocyanate und/oder Isocyanurate, wodurch die Viskosität der Isocyanate und/oder Isocyanurate drastisch reduziert werden kann.

DE 195 42 752 beschreibt die Verwendung von Pflanzenöl-Methylestern, vorzugsweise von Rapsölmethylester, als Lösungsmittel für einzelne oder beide Komponenten von Gießerei-Formstoff-Bindemitteln auf Polyurethan-Basis, deren Komponenten ein freie OH-Gruppen enthaltendes Phenolharz und ein Polyisocyanat als Reaktionspartner umfassen.

JP 53-128526 offenbart, dass zur Herstellung einer selbsthärtenden Formmischung ein Phenolharz enthaltend 0,05 bis 40 % Carbon- und/oder Sulfonsäure und Sand mit einem Polyisocyanat in Gegenwart eines basischen Katalysators gemischt werden.

JP 62-104648 offenbart, dass zur Herstellung einer Sandform Gießereisand mit einem Bindemittel umfassend ein Furanharz, Toluensulfonsäure, Tetraethylsilicat, Methyldiisocyanat, Siliciumdioxid und Borsäure geknetet wird.

CN 102049463 offenbart ein Verfahren umfassend das Mischen einer Natriumalkylsulfonat-Lösung mit einem Phenolharz, danach Mischen mit Sand, weiteres Mischen mit einem Polyisocyanat-Ester, und das Formen einer Gießform.

DE 36 39 233 A1 offenbart ein kalthärtendes Formstoff-Bindemittel zur Herstellung von kunstharzgebundenen Formkörpern, wobei das Bindemittel eine aldehyd-reaktive Substanz sowie ein Acetal als Reaktionspartner und eine starke Säure als Katalysator umfasst.

EP 0 182 809 B1 offenbart eine Bindemittelzusammensetzung hergestellt durch Umsetzung einer Harz-Komponente mit einer Härter-Komponente in Gegenwart einer Phosphor-Verbindung, wobei die Harz-Komponente ein Phenolharz umfassend Reaktionsprodukte eines Aldehyds mit einem Phenol an den beiden ortho-Positionen oder an einer ortho-Position und der para-Position umfasst, und die Härter-Komponente ein flüssiges Polyisocyanat mit mindestens zwei Isocyanatgruppen umfasst. Die Harz-Komponente wird getrennt hergestellt, bevor sie mit der Härter-Komponente in Gegenwart der Phosphor-Verbindung gemischt und umgesetzt wird. Die Bindemittelzusammensetzung kann bei Raumtemperatur mit einem Aminkatalysator gehärtet werden. Die PhosphorVerbindung ist eine Säure auf Phosphorbasis, die mindestens eine freie Hydroxylgruppe am Phosphoratom aufweist, und liegt in einer Menge vor, die die Verarbeitungszeit der Bindemittelzusammensetzung in Abwesenheit des Aminkatalysators verlängert.

Einzelne oder sämtliche der vorstehend genannten Aufgaben werden gelöst durch eine Mischung
herstellbar durch umsetzen lassen einer Vormischung von
- (av): 1,0 bis 50,0 Gewichtsprozent Methansulfonsäure
- (bv): einem oder mehreren Estern von einer oder mehreren Phosphor-Sauerstoff-Säuren, wobei die Gesamtmenge an den besagten Estern im Bereich von 5,0 bis 90,0 Gewichtsprozent liegt,
und
(cv) einem oder mehreren Silanen, ausgewählt aus der Gruppe bestehend aus Aminosilanen, Epoxysilanen, Mercaptosilanen, Hydroxysilanen und Ureidosilanen, wobei die Gesamtmenge an den besagten Silanen im Bereich von 5,0 bis 90,0 Gewichtsprozent liegt,
wobei der Anteil an Wasser maximal 0,1 Gewichtsprozent beträgt wobei die Gewichtsprozentangaben bezogen sind auf die Gesamtmenge der Bestandteile (av), (bv) und (cv) in der Vormischung.

Die oben genannte Vormischung ist eine Mischung umfassend oder bestehend aus
(a) 1,0 bis 50,0 Gewichtsprozent Methansulfonsäure
(b) ein oder mehreren Estern von einer oder mehreren Phosphor-Sauerstoff-Säuren, wobei die Gesamtmenge an den besagten Estern im Bereich von 5,0 bis 90,0 Gewichtsprozent liegt,
   und
(c) ein oder mehreren Silanen, ausgewählt aus der Gruppe bestehend aus Aminosilanen, Epoxysilanen, Mercaptosilanen, Hydroxysilanen und Ureidosilanen, wobei die Gesamtmenge an den besagten Silanen im Bereich von 5,0 bis 90,0 Gewichtsprozent liegt,
wobei der Anteil an Wasser maximal 0,1 Gewichtsprozent beträgt
wobei die Gewichtsprozentangaben bezogen sind auf die Gesamtmenge der Bestandteile (a), (b) und (c) in der Mischung.

Der Wassergehalt der Vormischung entspricht der Summe der Wassergehalte der einzelnen eingesetzten Komponenten.

Als Ester einer Phosphor-Sauerstoff-Säure werden vorzugsweise eingesetzt Ester der Phosphinsäure, Phosphonsäure, Phosphorsäure, Peroxophosphorsäure, Hypodiphosphonsäure, Diphosphonsäure, Hypodiphosphorsäure, Diphosphorsäure und Peroxodiphosphorsäure. Besonders bevorzugt sind Ester einer Phosphor-Sauerstoff-Säure ausgewählt aus der Gruppe bestehend aus den Estern der Phosphorsäure. Besonders bevorzugte Ester sind Mono- und Diester der Phosphorsäure, insbesondere Dibutylphosphat und Dodecylphosphat.

Besonders bevorzugte Silane sind ausgewählt aus der Gruppe bestehend aus Aminosilanen, Epoxysilanen und Ureidosilan. Ein besonders bevorzugtes Silan ist Bis(trimethoxysilylpropyl)amin.

Weitere geeignete Silane sind beispielsweise gamma-Hydroxypropyltrimethoxysilan, gamma-Aminopropyl-methyl-Diethoxysilan, gamma-Aminopropyltrimethoxysilan, gamma-Aminopropyltriethoxysilan, 3-Ureidopropyltriethoxysilan, gamma-Mercaptopropyltrimethoxysilan, gamma-Glycidoxypropyltrimethoxysilan, beta-(3,4-Epoxycyclohexyl)trimethoxysilan, N-beta-(Aminoethyl)-gamma-aminopropyltrimethoxysilan.

Gamma-Aminopropylmethyldiethoxysilan (N-Aminopropylmethyldiethoxysilan) wird unter den Handelsbezeichnungen Silan 1100, Silan 1101 und Silan 1102 (technische Qualität) und AMEO T und gamma-Aminopropyltriethoxysilan (N-Aminopropyltriethoxysilan) unter Dynasilan 1505 und 1506 (technische Qualität) geführt. Ebenso geeignet sind Silane, die unter den Handelsbezeichnungen DAMO, DAMO-T und Dynasilan 1411 erhältlich sind.

Es versteht sich, dass die Bestandteile (a), (b) und (c) jeweils separat bereitgestellt oder hergestellt werden können. Die Bestandteile (a), (b) und (c) können (vorzugsweise in den als bevorzugt angegebenen Mengenanteilen) nacheinander oder zeitgleich miteinander vermischt werden. Im Einzelfall können die einzelnen Bestandteile vollständig oder teilweise so miteinander reagieren, dass die resultierende Mischung die Bestandteile (a), (b) und (c) nicht bzw. nicht in den erfindungsgemäßen Mengenanteilen umfasst. Vielfach wird zunächst eine Vormischung mit den Komponenten (av), (bv) und (cv) hergestellt, wobei die vorstehend angegebenen Mengenanteile den Mengenanteilen entsprechen, in denen die Bestandteile (av), (bv) und (cv) nacheinander oder zeitgleich miteinander vermischt und dadurch die Vormischung erhalten wird, wobei eine etwaige Umsetzung bei Bestimmung der Gewichtsprozentangaben nicht berücksichtigt wird. Die Vormischung entspricht dabei dem gedanklichen Produkt, bei dem eine mögliche Umsetzung der Bestandteile noch nicht eingesetzt hat. Nach anschließendem Umsetzen lassen der hergestellten Vormischung resultiert die erfindungsgemäße Mischung.

Es wurde erfindungsgemäß gefunden, dass die erfindungsgemäße Mischung als Additiv in Bindemittelsystemen zur Verlängerung der Sandlebenszeit eines Formstoffes eingesetzt werden und dabei die insbesondere die insoweit üblichen Chlorsilane und Säurechloride ganz oder teilweise ersetzen kann. Neben einer Verlängerung der Sandlebenszeit konnte auch eine Verbesserung der Lagerstabilität beobachtet werden.

Weitere Aspekte und insbesondere weitere Aufgabenstellungen der vorliegenden Erfindung ergeben sich aus den beigefügten Ansprüchen und der nachfolgenden Beschreibung.

Erfindungsgemäß bevorzugt ist eine Mischung, bei der
die Gesamtmenge an Methansulfonsäure in der Mischung bzw. Vormischung im Bereich von 3,0 bis 40,0 Gewichtsprozent liegt, besonders bevorzugt im Bereich von 5,5 bis 35,0 Gewichtsprozent, bezogen auf die Gesamtmenge der Bestandteile (a), (b) und (c) in der Mischung bzw. der Bestandteile (av), (bv) und (cv) in der Vormischung
und/oder
die Gesamtmenge an dem einen oder den mehreren Estern von einer oder mehreren Phosphor-Sauerstoff-Säuren in der Mischung bzw. Vormischung im Bereich von 10,0 bis 80,0 Gewichtsprozent liegt, besonders bevorzugt im Bereich von 15,0 bis 70,0 Gewichtsprozent, bezogen auf die Gesamtmenge der Bestandteile (a), (b) und (c) in der Mischung bzw. der Bestandteile (av), (bv) und (cv) in der Vormischung
und/oder
die Gesamtmenge an dem einen oder den mehreren Silanen in der Mischung bzw. Vormischung im Bereich von 10,0 bis 85,0 Gewichtsprozent liegt, besonders bevorzugt im Bereich von 15,0 bis 80,0 Gewichtsprozent, bezogen auf die Gesamtmenge der Bestandteile (a), (b) und (c) in der Mischung bzw. der Bestandteile (av), (bv) und (cv) Vormischung.

Insbesondere bevorzugt ist eine erfindungsgemäße Mischung, bei der die Gesamtmenge an Methansulfonsäure in der Mischung bzw. Vormischung im Bereich 5,5 bis 35,0 Gewichtsprozent liegt, die Gesamtmenge an dem einen oder den mehreren Estern von einer oder mehreren Phosphor-Sauerstoff-Säuren in der Mischung bzw. Vormischung im Bereich von 15,0 bis 70,0 Gewichtsprozent liegt und gleichzeitig die Gesamtmenge an dem einen oder den mehreren Silanen in der Mischung bzw. Vormischung im Bereich von 15,0 bis 80,0 Gewichtsprozent liegt, jeweils bezogen auf die Gesamtmenge der Bestandteile (a), (b) und (c) in der Mischung bzw. der Bestandteile (av), (bv) und (cv) Vormischung.

Neben den Bestandteilen (a), (b), (c) in der Mischung bzw. Bestandteilen (av), (bv) und (cv) in der Vormischung können weitere Komponenten in der Mischung vorliegen. So kann es z.B. sinnvoll sein, die Viskosität der Mischung durch Zugabe von Lösungsmitteln einzustellen oder weitere Zusätze hinzuzugeben.

Dabei ist eine erfindungsgemäße Mischung für viele Anwendungszwecke besonders bevorzugt so ausgestaltet, dass die Gesamtmenge an Bestandteilen (a), (b), (c) in der Mischung bzw. Bestandteilen (av), (bv) und (cv) in der Vormischung 90 Gewichtsprozent oder mehr beträgt, vorzugsweise 95 Gewichtsprozent oder mehr, bezogen auf die Gesamtmenge der Mischung bzw. Vormischung. Für andere Anwendungszwecke ist der Anteil deutlich niedriger, siehe dazu die Ausführungen weiter unten.

In eigenen Untersuchungen hat sich gezeigt, dass neben den angegebenen Mengenanteilen auch die Verhältnisse der Masse der einzelnen Bestandteile zueinander einen Einfluss auf die Eigenschaften der erfindungsgemäßen Mischung besitzen.

Vorteilhafterweise ist eine erfindungsgemäße Mischung so ausgestaltet, dass
das Verhältnis der Masse von Bestandteil (a) zur Masse von Bestandteil (b) in der Mischung bzw. der Masse von Bestandteil (av) zur Masse von Bestandteil (bv) in der Vormischung im Bereich von 0,05 bis 1,4 liegt, vorzugsweise im Bereich von 0,1 bis 1,3, besonders bevorzugt im Bereich von 0,13 bis 1,25
und/oder (vorzugsweise "und")
das Verhältnis der Masse von Bestandteil (a) zur Masse von Bestandteil (c) in der Mischung bzw. der Masse von Bestandteil (av) zur Masse von Bestandteil (cv) in der Vormischung im Bereich von 0,03 bis 1,6 liegt, vorzugsweise im Bereich von 0,05 bis 1,5, besonders bevorzugt im Bereich von 0,07 bis 1,45
und/oder (vorzugsweise "und")
das Verhältnis der Masse von Bestandteil (b) zur Masse von Bestandteil (c) in der Mischung bzw. der Masse von Bestandteil (bv) zur Masse von Bestandteil (cv) in der Vormischung im Bereich von 0,1 bis 4,0 liegt, vorzugsweise im Bereich von 0,15 bis 3,5, besonders bevorzugt im Bereich von 0,18 bis 3,35.

Erfindungsgemäß besonders bevorzugte Mischungen sind so ausgestaltet, dass
der oder zumindest einer der Ester einer Phosphor-Sauerstoff-Säure, wobei die Gesamtmenge an den besagten Estern in der Mischung bzw. Vormischung im Bereich von 5,0 bis 90,0 Gewichtsprozent liegt, bevorzugt im Bereich von 10,0 bis 80,0 Gewichtsprozent, besonders bevorzugt im Bereich von 15,0 bis 70,0 Gewichtsprozent
und/oder
das oder zumindest eines der Silane ausgewählt ist aus der Gruppe bestehend aus Aminosilanen, Epoxysilanen, Mercaptosilanen und Ureidosilanen, wobei die Gesamtmenge an besagten Silanen in der Mischung bzw. Vormischung im Bereich von 5,0 bis 90,0 Gewichtsprozent liegt, bevorzugt im Bereich von 10,0 bis 85,0 Gewichtsprozent, besonders bevorzugt im Bereich von 15,0 bis 80,0 Gewichtsprozent,
wobei die Gewichtsprozentangaben jeweils bezogen sind auf die Gesamtmenge der Bestandteile (a), (b) und (c) in der Mischung bzw. (av), (bv) und (cv) in der Vormischung.

In der Praxis ist es vorteilhaft, wenn die erfindungsgemäße Mischung ein oder mehrere Lösungsmittel umfasst. Unter anderem lässt sich dadurch die Viskosität der Mischung einstellen, und eine spätere Dosierung der Mischung wird so vereinfacht. Die Bestandteile (a), (b) und (c) und die Bestandteile (av), (bv) und (cv) werden im Rahmen des vorliegenden Textes nicht zu den Lösungsmitteln gezählt.

Besonders bevorzugt ist eine erfindungsgemäße Mischung, umfassend ein oder mehrere Lösungsmittel ausgewählt aus der Gruppe bestehend aus
- aromatische Kohlenwasserstoffe, insbesondere Gemische aromatischer Kohlenwasserstoffe mit einem Siedebereich oberhalb von 150° C bei Normaldruck (z.B. "Solvesso 100", "Solvesso 150")
- Fettsäurealkylester vorzugsweise Rapsölmethylester
- Diester von Dicarbonsäuren, vorzugsweise Dibasicester ("DBE" bezeichnetes Gemisch aus Dimethylestern von C₄ - C₆ Dicarbonsäuren)
- Propylencarbonat
- Alkylsilikate, z.B. TEOS, Alkylsilikat-Oligomere und deren Gemische (d.h. Mischungen verschiedener Alkylsilikate, Mischungen verschiedener Oligomere und Mischungen von Alkylsilikat(en) mit Oligomer(en))
wobei die Gesamtmenge der besagten Lösungsmittel in der Mischung in bestimmten bevorzugten Ausgestaltungen im Bereich von 0 bis 80 Gew.-% liegt, bevorzugt im Bereich von 10 bis 50 Gew.-%, bezogen auf die Gesamtmenge der Mischung.

Geeignete Lösungsmittel für die erfindungsgemäße Mischung (wie oben definiert) und unabhängig von den jeweiligen Konzentrationen sind Tetraalkylsilikate wie Tetraethylsilikat (TEOS), aromatische Kohlenwasserstoffe (wie zum Beispiel substituierte Alkylbenzole, Xylole und Naphthaline) und deren Mischungen, Fettsäurealkylester (vorzugsweise Rapsölmethylester) und deren Mischungen, Gemische der verschiedenen Lösungsmitteltypen sowie Gemische davon mit Alkylencarbonaten wie Propylencarbonat oder Dialkylestern aliphatischer Dicarbonsäuren, vorzugsweise Dimethylestern von Adipinsäure, Glutarsäure und/oder Bernsteinsäure. Die letztgenannten Dialkylester werden beispielsweise unter der Bezeichnung DBE (Dibasic Ester) vertrieben.

Ein weiterer Aspekt der vorliegenden Erfindung betrifft die Verwendung einer erfindungsgemäßen Mischung (wie vorstehend definiert, vorzugsweise wie vorstehend als bevorzugt bezeichnet) als Additiv für die Polyisocyanat-Komponente und/oder Polyol-Komponente eines Zwei-Komponenten-Bindemittelsystems zur Herstellung eines Polyurethan-Harzes, vorzugsweise für die Polyisocyanat-Komponente eines Zwei-Komponenten-Bindemittelsystems zur Herstellung eines Polyurethan-Harzes zur Verwendung im Polyurethan-Cold-Box-Verfahren.

Das Additiv kann in beliebiger Reihenfolge mit der Polyisocyanat-Komponente und der Polyol-Komponente vereinigt werden; die Vereinigung mit der Polyisocyanat-Komponente und der Polyol-Komponente kann in Gegenwart des Formgrundstoffs erfolgen. Das Additiv kann insbesondere in einem ersten Schritt mit der Polyisocyanat-Komponente vereinigt werden, wobei sich eine erfindungsgemäße Polyisocyanat enthaltende Lösung bildet. Alternativ kann das Additiv in einem ersten Schritt mit der Polyol-Komponente vereinigt werden. Weiter alternativ kann das Additiv nach Art einer zusätzlichen Komponente in einem ersten Schritt dem Formgrundstoff oder einem Gemisch zugesetzt werden, welches bereits den Formgrundstoff und gegebenenfalls die Polyisocyanat-Komponente und/oder Polyol-Komponente enthält.

In eigenen Untersuchungen hat sich gezeigt, dass die Verwendung der erfindungsgemäßen Mischung als Additiv für die Polyisocyanat-Komponente eines Zwei-Komponenten-Bindemittelsystems zur Herstellung eines Polyurethan-Harzes mit ausgesprochen vorteilhaften Eigenschaften führt. Unter Verwendung einer solchen Polyisocyanat-Komponente hergestellte Gießerei-Sandkerne und -formen zeigen eine ausgesprochen gute Lagerstabilität und mittels der hergestellten Sandkerne und -formen hergestellten Gussprodukte weisen überraschend wenige Gussfehler auf. Die mit einer solchen Polyisocyanat-Komponente hergestellten Formstoffmischungen weisen eine sehr hohe Sandlebenszeit auf, ohne dass die Anfangs- und Endfestigkeit der daraus hergestellten Sandkerne und - formen beeinträchtigt wird.

Ein weiterer Aspekt der vorliegenden Erfindung betrifft eine Polyisocyanat enthaltende Lösung zur Verwendung als Komponente eines Formstoff-Bindemittelsystems,
herstellbar durch Mischen von
(I) einem oder mehreren Polyisocyanaten mit jeweils zwei oder mehr Isocyanat-Gruppen im Molekül, wobei vorzugsweise das eine Polyisocyanat oder zumindest eines der mehreren Polyisocyanate ein Methylendiphenyldiisocyanat oder dessen Oligomer oder Polymer ist,
   oder
   einer polyisocyanathaltigen Vormischung umfassend ein oder mehrere Polyisocyanate mit jeweils zwei oder mehr Isocyanat-Gruppen im Molekül, wobei vorzugsweise das eine Polyisocyanat oder zumindest eines der mehreren Polyisocyanate ein Methylendiphenyldiisocyanat oder dessen Oligomer oder Polymer ist,
   mit
(II) einer Gesamtmenge von 0,1 bis 10,0 Gew.-%, vorzugsweise 0,1 bis 5,0 Gew.-%, besonders bevorzugt 0,2 bis 2,0 Gew.-% einer erfindungsgemäßen Mischung, wobei die Gewichtsprozentangaben bezogen sind auf die Gesamtmenge der Polyisocyanat enthaltenden Lösung.

Eine Polyisocyanat enthaltende Lösung umfassend oder bestehend aus
(I) einem oder mehreren Polyisocyanaten mit jeweils zwei oder mehr Isocyanat-Gruppen im Molekül, wobei vorzugsweise das eine Polyisocyanat oder zumindest eines der mehreren Polyisocyanate ein Methylendiphenyldiisocyanat oder dessen Oligomer oder Polymer ist
   und
(II) den Bestandteilen
   (a) 0,001 bis 5,000 Gew.-% Methansulfonsäure
   (b) ein oder mehrere Ester von einer oder mehreren Phosphor-Sauerstoff-Säuren, wobei die Gesamtmenge an den besagten Estern im Bereich von 0,005 bis 9,0 Gewichtsprozent liegt,
      und
   (c) ein oder mehrere Silane, ausgewählt aus der Gruppe bestehend aus Aminosilanen, Epoxysilanen, Mercaptosilanen, Hydroxysilanen und Ureidosilanen, wobei die Gesamtmenge an den besagten Silanen im Bereich von 0,005 bis 9,0 Gewichtsprozent liegt,
wobei die Gewichtsprozentangaben bezogen sind auf die Gesamtmenge der Polyisocyanat enthaltenden Lösung, ist erhältlich durch Mischen der genannten Bestandteile. Auch eine solche Lösung ist zur Verwendung als Komponente eines Formstoff-Bindemittelsystems geeignet.

Erfindungsgemäß bevorzugt ist eine Polyisocyanat enthaltende Lösung, bei der
die Gesamtmenge an Methansulfonsäure in der Polyisocyanat enthaltenden Lösung im Bereich von 0,003 bis 4,000 Gewichtsprozent liegt, besonders bevorzugt im Bereich 0,0055 bis 3,500 Gewichtsprozent, bezogen auf die Gesamtmenge der Polyisocyanat enthaltenden Lösung
und/oder
die Gesamtmenge an dem einen oder den mehreren Estern von einer oder mehreren Phosphor-Sauerstoff-Säuren in der Polyisocyanat enthaltenden Lösung im Bereich von 0,01 bis 8,0 Gewichtsprozent liegt, besonders bevorzugt im Bereich von 0,015 bis 7,0 Gewichtsprozent, bezogen auf die Gesamtmenge der Polyisocyanat enthaltenden Lösung
und/oder
die Gesamtmenge an dem einen oder den mehreren Silanen in der Polyisocyanat enthaltenden Lösung im Bereich von 0,01 bis 8,5 Gewichtsprozent liegt, besonders bevorzugt im Bereich von 0,015 bis 8,0 Gewichtsprozent, bezogen auf die Gesamtmenge der Polyisocyanat enthaltenden Lösung.

Insbesondere bevorzugt ist eine erfindungsgemäße Polyisocyanat enthaltene Lösung, bei der die Gesamtmenge an Methansulfonsäure im Bereich von 0,0055 bis 3,500 Gewichtsprozent liegt, die Gesamtmenge an dem einen oder den mehreren Estern von einer oder mehreren Phosphor-Sauerstoff-Säuren im Bereich von 0,015 bis 7,0 Gewichtsprozent liegt und die Gesamtmenge an dem einen oder den mehreren Silanen gleichzeitig im Bereich von 0,015 bis 8,0 Gewichtsprozent liegt, jeweils bezogen auf die Gesamtmenge der Polyisocyanat enthaltenden Lösung.

Besonders bevorzugt ist eine erfindungsgemäße Polyisocyanat enthaltende Lösung, umfassend ein oder mehrere Lösungsmittel ausgewählt aus der Gruppe bestehend aus
- aromatische Kohlenwasserstoffe, insbesondere Gemische aromatischer Kohlenwasserstoffe mit einem Siedebereich oberhalb von 150° C bei Normaldruck (z.B. "Solvesso 100", "Solvesso 150")
- Fettsäurealkylester vorzugsweise Rapsölmethylester
- Diester von Dicarbonsäuren, vorzugsweise Dibasicester ("DBE" bezeichnetes Gemisch aus Dimethylestern von C₄ - C₆ Dicarbonsäuren)
- Propylencarbonat
- Alkylsilikate, z.B. TEOS, Alkylsilikat-Oligomere und deren Gemische (d.h. Mischungen verschiedener Alkylsilikate, Mischungen verschiedener Oligomere und Mischungen von Alkylsilikat(en) mit Oligomer(en))
   wobei die Gesamtmenge der besagten Lösungsmittel vorzugsweise im Bereich von 44,9 bis 1 Gewichtsprozent liegt, bezogen auf die Gesamtmenge der Polyisocyanat enthaltenden Lösung.

Besonders bevorzugt ist eine erfindungsgemäße Polyisocyanat enthaltende Lösung, umfassend ein oder mehrere Lösungsmittel ausgewählt aus der Gruppe der Tetraalkylsilikate, wobei die Gesamtmenge der Tetraalkylsilikate im Bereich von 44,9 bis 1 Gewichtsprozent liegt, bezogen auf die Gesamtmenge der Polyisocyanat enthaltenden Lösung.

Ebenfalls besonders bevorzugt ist eine erfindungsgemäße Polyisocyanat enthaltende Lösung, umfassend Tetraethylorthosilikat, wobei die Gesamtmenge an Tetraethylorthosilikat im Bereich von 44,9 bis 1 liegt, bezogen auf die Gesamtmenge der Polyisocyanat enthaltenden Lösung.

Bevorzugt ist eine erfindungsgemäße Polyisocyanat enthaltende Lösung, umfassend eine Gesamtmenge an Polyisocyanat im Bereich von 55 bis 95 Gew.-%, bezogen auf die Gesamtmasse der Polyisocyanat enthaltenden Lösung.

Dabei ist es erfindungsgemäß bevorzugt, dass die oben definierte Polyisocyanat enthaltende Lösung
Säurechloride (wie Phosphorylchlorid) maximal in einer Gesamt-Menge von 500ppm (0,05 Gewichtsprozent)
und/oder
Chlorsilane maximal in einer Gesamt-Menge von 500ppm (0,05 Gewichtsprozent)
und/oder
Flusssäure maximal in einer Menge von 500ppm (0,05 Gewichtsprozent)
und/oder
Polyole maximal in einer Menge von 500ppm (0,05 Gewichtsprozent)
und/oder
Phenolharze und Furanharze maximal in einer Gesamtmenge von 500ppm (0,05 Gewichtsprozent) umfasst,
jeweils bezogen auf die Gesamtmenge der Polyisocyanat enthaltenden Lösung.

Flusssäure wird in der Praxis bislang häufig verwendet, um die Feuchtigkeitsbeständigkeit der hergestellten Gießerei-Sandkerne oder -formen zu verbessern, sie besitzt jedoch aufgrund der hohen Giftigkeit ein enormes Gefahrenpotenzial. Aufgrund der Erfindung ist deren Einsatz nun entbehrlich.

Es hat sich in eigenen Untersuchungen gezeigt, dass die erfindungsgemäße Polyisocyanat enthaltende Lösung auch bei Abwesenheit von Phosphorylchlorid und/oder Flusssäure ausgesprochen gute Eigenschaften (hohe Lagerstabilität und lange Sandlebenszeiten) aufweist. Dabei werden gleichzeitig die gesundheitsgefährdenden Eigenschaften, die von Phosphorylchlorid und Flusssäure ausgehen, eliminiert. Zusätzlich weisen Gussstücke, die unter Verwendung einer erfindungsgemäßen Polyisocyanat enthaltenden Lösung hergestellt werden, nur eine überraschend geringe Korrosion auf (insbesondere bei Grauguss).

Gemäß einem weiteren verwandten Aspekt betrifft die Erfindung die Verwendung einer erfindungsgemäßen Polyisocyanat enthaltenden Lösung (wie vorstehend definiert, vorzugsweise als bevorzugt beschrieben) als Polyisocyanat-Komponente eines Zwei-Komponenten-Bindemittelsystems zur Herstellung eines Polyurethan-Harzes, vorzugsweise als Polyisocyanat-Komponente eines Zwei-Komponenten-Bindemittelsystems zur Herstellung eines Polyurethan-Harzes im Polyurethan-Cold-Box-Verfahren.

Gemäß einem weiteren verwandten Aspekt betrifft die Erfindung ein Zwei-Komponenten-Bindemittelsystem zur Herstellung eines Polyurethan-Harzes für die Gießerei, bestehend aus
- einer erfindungsgemäßen Polyisocyanat enthaltenden Lösung (wie vorstehend definiert, vorzugsweise als bevorzugt beschrieben) als Polyisocyanat-Komponente,
   und separat
- einer Polyol-Komponente, wobei die Polyol-Komponente vorzugsweise ein Phenol-Formaldehydharz mit zwei oder mehr Methylolgruppen pro Molekül umfasst, besonders bevorzugt ein Benzyletherharz mit ortho-ortho-Strukturen.

Bevorzugte Benzyletherharze mit ortho-ortho-Strukturen sind beispielsweise in EP 1057554 A2 offenbart.

Die Erfindung betrifft auch die Verwendung einer erfindungsgemäßen Polyisocyanat enthaltenden Lösung wie oben definiert oder eines erfindungsgemäßen Zwei-Komponenten-Bindemittelsystems wie oben definiert
- zur Herstellung von Gießerei-Sandkernen oder -formen nach dem Cold-Box-Verfahren
   und/oder
- zur Herstellung eines Polyurethan-Harzes vorzugsweise im Polyurethan-Cold-Box-Verfahren.

Die Erfindung betrifft ferner ein Gemisch zur Herstellung eines Kerns oder einer Form für die Gießerei, umfassend
- einen Formgrundstoff
   sowie entweder
- die Komponenten eines erfindungsgemäßen Zwei-Komponenten-Bindemittelsystems
   oder
- eine Polyisocyanat-Komponente und eine Polyolkomponente eines Zwei-Komponenten-Bindemittelsystems sowie eine erfindungsgemäße Mischung.

Weitere Gegenstände der vorliegenden Erfindung sind
eine Form oder ein Kern für die Gießerei,
- umfassend einen Formgrundstoff, vorzugsweise einen Formsand, sowie entweder das aus der Härtung eines erfindungsgemäßen Zwei-Komponenten-Bindemittelsystems (wie vorstehend definiert, vorzugsweise als bevorzugt beschrieben) resultierende gehärtete Bindemittelsystem
   oder
- herstellbar durch Formen eines Gemischs umfassend einen Formgrundstoff, vorzugsweise einen Formsand, sowie die Komponenten eines erfindungsgemäßen Zwei-Komponenten-Bindemittelsystems (wie vorstehend definiert, vorzugsweise als bevorzugt beschrieben) und Härten des Bindemittelsystems in dem geformten Gemisch zu einem gehärteten Bindemittelsystem, sowie
   ein Verfahren zur Herstellung eines Kerns oder einer Form für die Gießerei, vorzugsweise nach dem Polyurethan-Cold-Box-Verfahren, mit folgenden Schritten:
- Vermischen eines Formgrundstoffs, vorzugsweise eines Formsands, mit den Komponenten eines erfindungsgemäßen Zwei-Komponenten-Bindemittelsystems, (wie vorstehend definiert, vorzugsweise als bevorzugt beschrieben)
- Formen des resultierenden Gemisches umfassend Formgrundstoff und die Komponenten des Bindemittelsystems,
- Kontaktieren des resultierenden geformten Gemisches mit einem gasförmigen Katalysator, vorzugsweise (insbesondere im Rahmen des Cold-Box-Verfahrens) mit einem gasförmigen Amin, so dass das Bindemittelsystem härtet und den Formgrundstoff bindet.

Bevorzugt werden die Gießerei-Sandkerne bzw. -formen nach dem Cold-Box-Verfahren hergestellt. Beim Cold-Box-Verfahren handelt es sich um das im Gießerei-Bereich wichtigste Polyurethan-Begasungsverfahren. Die Bezeichnung entspricht dem VDG-Sprachgebrauch und ist unter dieser Verfahrensbezeichnung auch in der deutschen Gießerei-Industrie eingeführt worden. Hierzu kann beispielsweise auf US 3,409,579 verwiesen werden. Im Cold-Box-Verfahren dient ein aminisches Begasungsmittel wie beispielsweise Triethyl-, Dimethylethyl-, Dimethyl-n-Propyl- oder Dimethylisopropylamin als Beschleunigungskatalysator, der die Addition von Polyisocyanat an ein Phenolharz, z. B. Benzyletherharz erheblich beschleunigt. Es bildet sich dabei ein Polyurethan. Im Cold-Box-Verfahren eingesetzte Harze sind dabei in der Regel wasserfrei, da Wasser mit dem Polyisocyanat frühzeitig reagieren würde.

Verfahrenstechnisch wird üblicherweise so vorgegangen, dass zunächst der das erfindungsgemäße Formsand-Bindemittelsystem enthaltende Gießerei-Formsand (Kernsand) in den Kernkasten geschossen wird. Danach wird mit einem Amin-Luft- oder AminStickstoff-Gemisch als Gas oder Aerosol begast. Bei den Aminen handelt es sich im Allgemeinen um Triethyl-, Dimethylethyl-, Dimethyl-n-Propyl- oder Dimethylisopropylamin, die jeweils mit einem Druck von 2 bis 6 bar in den Kernkasten eingeblasen werden. Die Restgase werden üblicherweise mit erwärmter Spülluft, Stickstoff oder CO₂-Gas aus dem Kern ausgetrieben und können in einem Säurewäscher, der mit verdünnter Schwefelsäure oder Phosphorsäure beschickt wird, entsorgt werden.

Das erfindungsgemäße Bindemittelsystem härtet dabei je nach Amin bei Temperaturen von vorzugsweise 20 bis 100 °C, besonders bevorzugt 45 bis 80 °C aus. Speziell beim Cold-Box-Verfahren erfolgt die Aushärtung üblicherweise bei der in der jeweiligen Gießerei herrschenden Umgebungstemperatur, d.h. im Allgemeinen bei einer Temperatur im Bereich von 15 bis 50 °C, insbesondere bei einer Temperatur im Bereich von 15 bis 40 °C. Daher wird das Bindemittel als kalthärtendes Bindemittel für Formsand bezeichnet.

Das Cold-Box-Verfahren lässt sich in breitem Maßstab einsetzen, insbesondere im Metallguss, beispielsweise im Motorenguss.

Bei Verwendung der erfindungsgemäßen Mischung bzw. der erfindungsgemäßen Polyisocyanat enthaltende Lösung sind die Formgrundstoffe/Formsande nach dem Guss weitestgehend chlorfrei, sodass eine Korrosion der Gussteile (insbesondere bei Grauguss) vermieden wird und die bereits verwendeten Sandkerne bzw. Formen als Altsande wiederverwendet werden können. Hierzu werden die Altsande thermisch und/oder mechanisch aufgearbeitet. Beide Aufarbeitungsweisen führen zu keinen oder nicht nennenswerten Belastungen mit gesundheitsgefährdenden Chemikalien. Diese Wiederverwertung der bereits eingesetzten Sandkerne bzw. Aufarbeitung der Altsande ist selbst mit Bentonit-haltigen Systemen oder basischen Systemen möglich.

Die nachfolgenden Beispiele sollen die Erfindung erläutern, ohne einzuschränken. Die in den Beispielen verwendete Angabe "GT" bedeutet Gewichtsteile (Massenteile).

### Beispiel 1: Herstellung einer erfindungsgemäßen Mischung M1:

In ein Reaktionsgefäß, das mit Rührer, Kühlung und Thermometer ausgestattet war, wurden folgende Stoffe in der angegebenen Reihenfolge dosiert, wobei die Temperatur unter 35°C gehalten wurde:
25,84 GT Dibutylphosphat
6,46 GT Methansulfonsäure
37,70 GT Bis(trimethoxysilylpropyl)amin
30,00 GT Tetraethylsilikat

Das Produkt ist eine erfindungsgemäße Mischung.

### Beispiel 1a: Herstellung einer erfindungsgemäßen Mischung M2:

In ein Reaktionsgefäß, das mit Rührer, Kühlung und Thermometer ausgestattet war, wurden folgende Stoffe in der angegebenen Reihenfolge dosiert, wobei die Temperatur unter 35°C gehalten wurde:
25,84 GT Dibutylphosphat
6,46 GT Methansulfonsäure
37,70 GT Bis(trimethoxysilylpropyl)amin
5,00 GT Tetraethylsilikat

Das Produkt ist eine erfindungsgemäße Mischung.

### Beispiel 1b: Herstellung einer erfindungsgemäßen Mischung M3:

In ein Reaktionsgefäß, das mit Rührer, Kühlung und Thermometer ausgestattet war, wurden folgende Stoffe in der angegebenen Reihenfolge dosiert, wobei die Temperatur unter 35°C gehalten wurde:
25,84 GT Dibutylphosphat
6,46 GT Methansulfonsäure
37,70 GT Bis(trimethoxysilylpropyl)amin

Das Produkt ist eine erfindungsgemäße Mischung.

### Beispiel 2: Herstellung eines bevorzugten Phenolharzes des Benzylethertyps (Präkondensat)

In einem Reaktionsgefäß, das mit Kühler, Thermometer und Rührer ausgerüstet war, wurden:
467,1 GT Phenol
213,6 GT Paraformaldehyd (als Formaldehydquelle) und
0,2 GT Zinkacetat
14,2 GT Methanol
vorgelegt. Der Kühler wurde auf Rückfluss gesetzt. Die Temperatur wurde innerhalb einer Stunde kontinuierlich ansteigend auf 110°C gebracht und auf dieser Temperatur gehalten, bis ein Brechungsindex (n_{D}²⁰) von 1,547 erreicht war (zwei bis drei Stunden).

Anschließend wurde der Kühler auf atmosphärische Destillation umgestellt und die Temperatur innerhalb von einer Stunde auf 125 -126° C erhöht, sodass die flüchtige Bestandteile aus der Produktlösung abdestilliert wurden, bis ein Brechungsindex (n_{D}²⁰) des Produktes von etwa 1,595 erreicht war.

Danach erfolgte eine Vakuumdestillation bis zu einem Brechungsindex (n_{D}²⁰) von 1,617, bei der die restlichen flüchtigen Bestandteile entfernt wurden.

### Beispiel 3: Herstellung einer Cold-Box-Phenolharzlösung H1:

Aus dem Phenolharz (Präkondensat) gemäß Beispiel 2 wurden nach Erreichen des Brechungsindex-Sollwertes eine Harzlösung H 1 für das Cold-Box-Verfahren hergestellt, welche die nachfolgend angegebene Zusammensetzung aufwies:

**Phenolharz-Lösung H 1**

| | | |
|---|---|---|
| 53,5 | GT | Phenolharz (Präkondensat) gemäß Beispiel 2 |
| 29,5 | GT | Tetraethylsilikat |
| 16,0 | GT | DBE ("Dibasic Ester") |
| 1,0 | GT | Epoxysilan |

Die hergestellte Phenolharz-Lösung H 1 ist als Polyol-Komponenten eines erfindungsgemäßen Zwei-Komponenten-Bindemittelsystems anzusehen (vgl. Bsp. 4a).

### Beispiel 4: Herstellung von Polyisocyanat enthaltenden Lösungen A 1 (nicht erfindungs-gemäß) und A 2 (erfindungsgemäß) für das Cold-Box-Verfahren

Nicht erfindungsgemäße Polyisocyanat enthaltende Lösung A 1:
Die nachfolgend angegebenen Komponenten wurden unter ständiger Durchmischung nacheinander zusammengegeben, sodass die Polyisocyanat enthaltende Lösung A 1 resultierte.

| | | |
|---|---|---|
| 80,0 | GT | Diphenylmethandiisocyanat |
| 10,0 | GT | Tetraethylsilikat |
| 10,0 | GT | Dioctyladipat |
| 0,4 | GT | Säurechlorid |
| 0,5 | GT | Bis(trimethoxysilylpropyl)amin |

Erfindungsgemäße Polyisocyanat enthaltende Lösung A 2:
Die nachfolgend angegebenen Komponenten wurden unter ständiger Durchmischung nacheinander zusammengegeben, sodass die erfindungsgemäße Polyisocyanat enthaltende Lösung A 2 resultierte.

| | | |
|---|---|---|
| 80,0 | GT | Diphenylmethandiisocyanat |
| 10,0 | GT | Tetraethylsilikat |
| 10,0 | GT | Dioctyladipat |
| 1,33 | GT | Mischung M 1 (gemäß Beispiel 1) |

Die hergestellte erfindungsgemäße Polyisocyanat enthaltende Lösung A 2 entspricht einer Polyisocyanat-Komponente in einem erfindungsgemäßen Zwei-Komponenten-Bindemittelsystem (vgl. Beispiele 4a und 5).

### Beispiel 4a: Herstellung eines erfindungsgemäßen Zwei-Komponenten-Bindemittelsystems:

Ein erfindungsgemäßes Zwei-Komponenten-Bindemittelsystem wird hergestellt durch das Bereitstellen einer Phenolharz-Lösung H 1 (Polyol-Komponente) gemäß Beispiel 3 und davon separat einer erfindungsgemäßen Polyisocyanat enthaltenden Lösung A 2 (Polyisocyanat-Komponente).

### Beispiel 5: Herstellen von Cold-Box-Prüfkörpern und kerntechnische Prüfung:

Unter Verwendung der oben angegebenen Phenolharzlösung und Polyisocyanat enthaltenden Lösung (vgl. die Beispiele 3 und 4), wurden die in der nachfolgenden Tabelle 1 aufgeführten Gemische zur Herstellung eines Kerns oder einer Form hergestellt, indem jeweils

| | |
|---|---|
| 100 | GT Quarzsand H 32, |
| 0,7 | GT der jeweiligen Phenolharz-Lösung (Beispiel 3; H 1) und |
| 0,7 | GT der jeweiligen Polyisocyanat enthaltenden Lösung (Beispiel 4; A 1 = nicht erfindungsgemäß, A 2 = erfindungsgemäß) |

in einem Schwingmischer vermischt wurden.

Die Mischzeit betrug jeweils 60 s. Mit den erhaltenen Mischungen wurden bei einem Schießdruck von 4 bar Prüfkörper (+GF+ Riegel) geschossen, die anschließend 10 s lang bei einem Begasungsdruck von 4 bar mit Dimethylisopropylamin begast und dann 10 s lang mit Luft gespült wurden. Die Sandmenge pro Gemisch zur Herstellung eines Kerns oder einer Form betrug 4 kg, die Sandtemperatur und die Raumtemperatur lagen bei etwa 20 °C, die relative Luftfeuchtigkeit (RLF) betrug in etwa 30 %. Anschließend wurden die Biegefestigkeiten der so erhaltenen Cold-Box-Prüfkörper nach der GF-Methode ermittelt.

Bei der Herstellung der Cold-Box-Prüfkörper und der Prüfung der Biegefestigkeiten wurden die Vorschriften des VDG-Merkblatts P 73 vom Februar 1996 beachtet.

In Tabelle 1 sind zunächst die Festigkeitswerte von einem erfindungsgemäßen und einem herkömmlichen Kern gegenübergestellt (in N/cm²).

Für die in Tabelle 1 zusammengefassten Ergebnisse wurden Untersuchungen zum einen mit einer sofort nach dem Vermischen zu einem Cold-Box-Prüfkörper verarbeiteten Mischung (Spalte "SOFORT") und zum anderen mit einer nach dem Vermischen (zur Beurteilung der sog. "Sandlebenszeit" SLZ) zunächst eine Stunde gelagerten und dann zu einem Cold-Box-Prüfkörper verarbeiteten Mischung (Spalte "SLZ 1h") durchgeführt. Des Weiteren wurden entsprechende Untersuchungen nach drei Stunden Lagerung des Gemisches zur Herstellung eines Kerns oder einer Form bei Raumtemperatur (Spalte "SLZ 3h RT") sowie bei einer Lagertemperatur von 40°C (Spalte "SLZ 3h 40°C") durchgeführt. Die Ermittlung der Biegefestigkeiten der jeweiligen Cold-Box-Prüfkörper erfolgte sofort nach dem Begasen)

In Tabelle 1 sind zusätzlich in den mit den Buchstaben B, D, F gekennzeichneten Spalten Ergebnisse zur Feuchtigkeitsbeständigkeit der erfindungsgemäßen Prüfkörper (Kerne) veranschaulicht. Dazu wurden drei unterschiedliche Prüfreihen durchgeführt:
- Reihe B:: Prüfkörper sofort nach Herstellung in Wasserschlichte getaucht, luftgetrocknet, nach 1 Stunde geprüft ("B 1 h") geprüft.
- Reihe D:: Prüfkörper sofort nach Herstellung in Wasserschlichte getaucht, 1 Stunde im Ofen bei 150°C getrocknet, heiß ("D heiß") geprüft.
- Reihe F:: Prüfkörper bei über 95% relativer Luftfeuchtigkeit für 1 Tag ("F 1 d") gelagert, dann geprüft.

**Tabelle 1: Biegefestigkeiten**

| Verarbeitung des Gemisches | | Sofort | SLZ 1h | SLZ 3h RT | S LZ 3h 40 °C | B 1h | D heiß | F 1d |
|---|---|---|---|---|---|---|---|---|
| Phenolharzlösungen | Polyisocyanat enthaltende Lösung | | | | | | | |
| H 1 | A 1 | 264 | 230 | 221 | 168 | 315 | 305 | 388 |
| H 1 | A 2 | 265 | 255 | 241 | 241 | 282 | 277 | 403 |

### Beispiel 6: Synergieeffekt der Wirkstoffkombination

Es wurden verschiedene Polyisocyanat enthaltende Lösungen A 3 - A 6 (analog zu Beispiel 4) hergestellt, die die nachfolgend angegebenen Zusammensetzungen aufwiesen:
Nicht erfindungsgemäße Polyisocyanat enthaltende Lösung A 3 (Grundmischung)

| | | |
|---|---|---|
| 80,0 | GT | Diphenylmethandiisocyanat |
| 10,0 | GT | Tetraethylsilikat |
| 10,0 | GT | Dioctyladipat |

Nicht erfindungsgemäße Polyisocyanat enthaltende Lösung A 4 (mit Methansulfonsäure)

| | | |
|---|---|---|
| 80,0 | GT | Diphenylmethandiisocyanat |
| 10,0 | GT | Tetraethylsilikat |
| 10,0 | GT | Dioctyladipat |
| 0,1 | GT | Methansulfonsäure |

Nicht erfindungsgemäße Polyisocyanat enthaltende Lösung A 5 (mit Dibutylphosphat)

| | | |
|---|---|---|
| 80,0 | GT | Diphenylmethandiisocyanat |
| 10,0 | GT | Tetraethylsilikat |
| 10,0 | GT | Dioctyladipat |
| 0,4 | GT | Dibutylphosphat |

Nicht erfindungsgemäße Polyisocyanat enthaltende Lösung A 6 (mit Bis(trimethoxysilylpropyl)amin)

| | | |
|---|---|---|
| 80,0 | GT | Diphenylmethandiisocyanat |
| 10,0 | GT | Tetraethylsilikat |
| 10,0 | GT | Dioctyladipat |
| 0,5 | GT | Bis(trimethoxysilylpropyl)amin |

Die hergestellten Polyisocyanat enthaltenden Lösungen A3 bis A6 wurden analog zu Beispiel 5 zur Herstellung von Cold-Box-Prüfkörpern verwendet. Als Phenolharzlösungen diente die Phenolharz-Lösung H1 gemäß Beispiel 3.

Die Biegefestigkeiten der hergestellten Cold-Box-Prüfkörper (bestimmt wie in Beispiel 5) sind in Tabelle 2 zusammengefasst. Zum Vergleich wurden die in Beispiel 5 ermittelten Werte eines erfindungsgemäß hergestellten Cold-Box-Prüfkörpers (auf Basis von Polyolkomponente H1 und Polyisocyanatkomponente A2) auch in die Tabelle 2 aufgenommen.

**Tabelle 2:**

| Verarbeitung des Gemisches zur Herstellung eines Kerns oder einer Form | | Sofort | SLZ 1h | SLZ 3h RT | S LZ 3h 40 °C | B 1h | D heiß | F 1d |
|---|---|---|---|---|---|---|---|---|
| Phenolharz-Lösung | Polyisocyanat enthaltende Lösung | | | | | | | |
| H 1 | A3 | 241 | 194 | 135 | nb* | 94 | 165 | 263 |
| H 1 | A4 | 229 | 209 | 180 | 94 | 91 | 171 | 239 |
| H 1 | A 5 | 220 | 197 | 194 | 186 | 99 | 186 | 249 |
| H 1 | A 6 | 235 | 191 | 124 | nu | 88 | 180 | 241 |
| H 1 | A 2 | 265 | 255 | 241 | 241 | 282 | 277 | 403 |

| | | | | | | | | |
|---|---|---|---|---|---|---|---|---|
| *nicht bestimmbar, Formsandmischung ausgehärtet | | | | | | | | |

Man erkennt, dass sowohl die Biegefestigkeiten im Rahmen der Untersuchung zur Anfangsfestigkeit und Sandlebenszeit als auch die Biegefestigkeiten im Rahmen der Untersuchung zur Feuchtigkeitsbeständigkeit (B, D, F Festigkeiten) für das erfindungsgemäße Gemisch (H 1, A 2) höher sind als für die Vergleichsgemische (H 1, A 4-6).

### Beispiel 7: Eliminierung von Flusssäure:

Aus dem Phenolharz (Präkondensat) gemäß Beispiel 2 wurden nach Erreichen des Brechungsindex-Sollwertes Harzlösungen hergestellt, welche die nachfolgend angegebenen Zusammensetzungen aufwiesen:

**Phenolharz-Lösung H 3**

| | | |
|---|---|---|
| 54,45 | GT | Phenolharz (Präkondensat) |
| 23,65 | GT | DBE ("Dibasic Ester") |
| 21,5 | GT | Rapsölmethylester |
| 0,3 | GT | Amidosilan |
| 0,1 | GT | Flusssäure |

**Phenolharz-Lösung H 4**

| | | |
|---|---|---|
| 54,45 | GT | Phenolharz (Präkondensat) |
| 23,65 | GT | DBE ("Dibasic Ester") |
| 21,5 | GT | Rapsölmethylester |

**Phenolharz-Lösung H 5**

| | | |
|---|---|---|
| 50,84 | GT | Phenolharz (Präkondensat) |
| 17,1 | GT | DBE ("Dibasic Ester") |
| 13,0 | GT | Rapsölmethylester |
| 18,6 | | GT Solvesso 100 (Mischung aromatischer Kohlenwasserstoffe, (AS 64742-95-6)) |
| 0,31 | GT | Amidosilan |
| 0,15 | GT | Flusssäure |

**Phenolharz-Lösung H 6**

| | | |
|---|---|---|
| 50,84 | GT | Phenolharz (Präkondensat) |
| 17,1 | GT | DBE ("Dibasic Ester") |
| 13,0 | GT | Rapsölmethylester |
| 18,6 | GT | Solvesso 100 |

Anschließend wurden herkömmliche und erfindungsgemäße Polyisocyanat enthaltende Lösungen hergestellt, welche die nachfolgend angegebenen Zusammensetzungen aufwiesen:

**Nicht erfindungsgemäße Polyisocyanat enthaltende Lösung A 7**

| | | |
|---|---|---|
| 85,0 | GT | Diphenylmethandiisocyanat |
| 14,8 | GT | Rapsölmethylester |
| 0,2 | GT | Phosphoroxidchlorid |

**Erfindungsgemäße Polyisocyanat enthaltende Lösung A 8**

| | | |
|---|---|---|
| 85,0 | GT | Diphenylmethandiisocyanat |
| 14,8 | GT | Rapsölmethylester |
| 0,8 | GT | Mischung M 1 |

**Nicht erfindungsgemäße Polyisocyanat enthaltende Lösung A 9**

| | | |
|---|---|---|
| 84,7 | GT | Diphenylmethandiisocyanat |
| 13,0 | GT | Solvesso 150 |
| 2,0 | GT | Rapsölmethylester |
| 0,3 | GT | Phosphoroxidchlorid |

**Erfindungsgemäße Polyisocyanat enthaltende Lösung A 10**

| | | |
|---|---|---|
| 84,7 | GT | Diphenylmethandiisocyanat |
| 13,0 | GT | Solvesso 150 |
| 2,0 | GT | Rapsölmethylester |
| 0,8 | GT | Mischung M 1 |

Mit den hergestellten Lösungen wurden, analog zu Beispiel 5, Gemische zur Herstellung eines Kerns oder einer Form und Cold-Box-Prüfkörper hergestellt und entsprechend auf ihre Eigenschaften untersucht.

Die Ergebnisse der Biegefestigkeiten der nicht erfindungsgemäßen und der erfindungsgemäßen Cold-Box-Prüfkörper (vgl. Beispiel 5) sind in Tabelle 3 zusammengefasst:

**Tabelle 3:**

| Verarbeitung des Gemisches zur Herstellung eines Kerns oder einer Form | | Sofort | SLZ 1h | SLZ 3h RT | B 1h | D heiß | F 1d |
|---|---|---|---|---|---|---|---|
| Phenolharz-Lösung | Polyisocyanat enthaltende Lösung | | | | | | |
| H 3 | A 7 | 194 | 206 | 155 | 278 | 274 | 327 |
| H 4 | A 8 | 199 | 220 | 167 | 273 | 276 | 330 |
| H 5 | A 9 | 194 | 226 | 153 | 295 | 264 | 314 |
| H 6 | A10 | 188 | 215 | 215 | 285 | 273 | 339 |

Die Ergebnisse zeigen, dass mit Phosphoroxidchlorid und Flusssäure zwei sehr giftige Stoffe in dem Gemisch zur Herstellung eines Kerns oder einer Form eliminiert werden können, ohne dass die Eigenschaften der hergestellten Cold-Box-Prüfkörper verschlechtert werden.

### Beispiel 8: Herstellung eines Gemisches zur Herstellung eines Kerns oder einer Form für das Cold-box-Verfahren mit unterschiedlichem Zusatz der erfindungsgemäßen Mischung M 1 zu den Komponenten des Gemisches zur Herstellung eines Kerns oder einer Form

Für die Bestimmung der Biegefestigkeiten eines erfindungsgemäßen Prüfkörpers zur Verwendung im Cold-box-Verfahren wurde die Mischung M1 nach Beispiel 1 innerhalb einer Messreihe nur der Phenolharz-Lösung oder der Polyisocyanat enthaltenden Lösung oder dem Gemisch zur Herstellung eines Kerns oder einer Form zugegeben, welche nachfolgend angegebene Zusammensetzung aufweisen:

**Phenolharz-Lösung H 7**

| | | |
|---|---|---|
| 54,0 | GT | Phenolharz (Präkondensat) |
| 29,8 | GT | Tetraethylsilikat |
| 16,2 | GT | DBE ("Dibasic Ester") |
| 2,0 | GT | Mischung M 1 |

**Phenolharz-Lösung H 8**

| | | |
|---|---|---|
| 54,0 | GT | Phenolharz (Präkondensat) |
| 29,8 | GT | Tetraethylsilikat |
| 16,2 | GT | DBE ("Dibasic Ester") |

**Erfindungsgemäße Polyisocyanat-Lösung A 11**

| | | |
|---|---|---|
| 80,0 | GT | Diphenylmethandiisocyanat |
| 10,0 | GT | Tetraethylsilikat |
| 10,0 | GT | Dioctyladipat |
| 2,0 | GT | Mischung M 1 |

Erfindungsgemäße Gemische zur Herstellung eines Kerns oder einer Form F 1 - F 3
Erfindungsgemäßes Gemisch zur Herstellung eines Kerns oder einer Form F1

| | | |
|---|---|---|
| 100 | GT | Formsand H 32 |
| 0,7 | GT | Phenolharz-Lösung H 8 |
| 0,7 | GT | Polyisocyanat-Lösung A 11 (enthält Mischung M 1) |

Gemisch zur Herstellung eines Kerns oder einer Form F2

| | | |
|---|---|---|
| 100 | GT | Formsand H 32 |
| 0,7 | GT | Phenolharz-Lösung H 7 (enthält Mischung M 1) |
| 0,7 | GT | Polyisocyanat-Lösung A 3 |

Gemisch zur Herstellung eines Kerns oder einer Form F3

| | | |
|---|---|---|
| 100 | GT | Formsand H 32 |
| 0,014 | GT | Mischung M 1 (erfindungsgemäß; gemäß Beispiel 1) |
| 0,7 | GT | Phenolharz-Lösung H 8 |
| 0,7 | GT | Polyisocyanat-Lösung A 3 |

**Tabelle 4:**

| Verarbeitung des Gemisches zur Herstellung eines Kerns oder einer Form | Sofort | SLZ 1h | SLZ 3h RT | S LZ 3h 40 °C | B 1h | D heiß | F 1d |
|---|---|---|---|---|---|---|---|
| Gemisch zur Herstellung eines Kerns oder einer Form | | | | | | | |
| F1 | 247 | 226 | 195 | 191 | 297 | 283 | 374 |
| F2 | 226 | 207 | 187 | 156 | 258 | 241 | 283 |
| F3 | 168 | 197 | 206 | nb* | 270 | 266 | 321 |

| | | | | | | | |
|---|---|---|---|---|---|---|---|
| *nicht bestimmbar, Formsandmischung ausgehärtet | | | | | | | |

Man erkennt, dass das Gemisch F1 (Zusatz der Mischung M 1 in die Polyisocyanat enthaltende Lösung (A 11)) besonders hohe Biegefestigkeiten ermöglicht.

### Beispiel 9: Einsatz eines triaminofunktionellen Silans

Bei der Herstellung der erfindungsgemäßen Mischung M4 (vgl. auch Beispiel 1) wurde als zusätzlicher Bestandteil ein triaminofunktionelles Silan eingesetzt.

**Erfindungsgemäße Mischung M4**

| | | |
|---|---|---|
| 17,0 | GT | Tetraethylsilikat |
| 24,0 | GT | Dibutylphosphat |
| 6,0 | GT | Methansulfonsäure |
| 10,0 | GT | Triaminofunktionelles Silan |

Zusammensetzung der Polyisocyanat-Lösungen:

**Erfindungsgemäße Polyisocyanat enthaltende Lösung A 12**

| | | |
|---|---|---|
| 78,9 | GT | Diphenylmethandiisocyanat |
| 9,86 | GT | Tetraethylsilikat |
| 9,86 | GT | Dioctyladipat |
| 1,4 | GT | Mischung M 1 |

**Erfindungsgemäße Polyisocyanat enthaltende Lösung A 13**

| | | |
|---|---|---|
| 89,4 | GT | Diphenylmethandiisocyanat |
| 9,92 | GT | Tetraethylsilikat |
| 9,92 | GT | Dioctyladipat |
| 0,86 | GT | Mischung M 4 |

Mit den hergestellten Lösungen wurden, analog zu Beispiel 5, Gemische zur Herstellung eines Kerns oder einer Form und Cold-Box-Prüfkörper hergestellt und entsprechend auf ihre Eigenschaften untersucht.

Die Ergebnisse der Biegefestigkeiten der herkömmlichen und der erfindungsgemäßen Cold-Box-Prüfkörper (vgl. Beispiel 5) sind in Tabelle 5 zusammengefasst:

**Tabelle 5:**

| Verarbeitung des Gemisches zur Herstellung eines Kerns oder einer Form | | Sofort | SLZ 1h | SLZ 3h RT | B 1h | D heiß | F 1d |
|---|---|---|---|---|---|---|---|
| Phenolharz-Lösung | Polyisocyanat enthaltende Lösung | | | | | | |
| H 1 | A 12 | 253 | 285 | 236 | 286 | 294 | 389 |
| H 1 | A 13 | 247 | 259 | 201 | 162 | 250 | 394 |

Man erkennt, dass die hergestellten erfindungsgemäßen Formen oder Kerne ähnliche Biegefestigkeiten aufweisen.

Beispiel 10: Herstellung der Mischung unter Verwendung von Dodecylphosphat

**Erfindungsgemäße Mischung M 5**

| | | |
|---|---|---|
| 14,0 | GT | Tetraethylsilikat |
| 20,0 | GT | Dodecylphosphat |
| 3,0 | GT | Methansulfonsäure |
| 17,5 | GT | Aminosilan |

**Erfindungsgemäße Polyisocyanat enthaltende Lösung A 14**

| | | |
|---|---|---|
| 80 | GT | Diphenylmethandiisocyanat |
| 10 | GT | Tetraethylsilikat |
| 10 | GT | Dioctyladipat |
| 1,4 | GT | Mischung M 1 |

Erfindungsgemäße Polyisocyanat enthaltende Lösung A 15 (mit Dodecylphosohat)

| | | |
|---|---|---|
| 80 | GT | Diphenylmethandiisocyanat |
| 10 | GT | Tetraethylsilikat |
| 10 | GT | Dioctyladipat |
| 1,64 | GT | Mischung M 5 |

Mit den hergestellten Lösungen wurden, analog zu Beispiel 5, Gemische zur Herstellung eines Kerns oder einer Form und Cold-Box-Prüfkörper hergestellt und entsprechend auf ihre Eigenschaften untersucht.

Die Ergebnisse der Biegefestigkeiten der herkömmlichen und der erfindungsgemäßen Cold-Box-Prüfkörper (vgl. Beispiel 5) sind in Tabelle 6 zusammengefasst:

**Tabelle 6:**

| Verarbeitung des Gemisches zur Herstellung eines Kerns oder einer Form | | Sofort | SLZ 1h | SLZ 3h RT | SLZ 3h 40°C | B 1h | D heiß | F 1d |
|---|---|---|---|---|---|---|---|---|
| Phenolharz-Lösung | Polyisocyanat enthaltende Lösung | | | | | | | |
| H 1 | A 14 | 243 | 247 | 233 | 259 | 283 | 253 | 356 |
| H 1 | A 15 | 270 | 223 | 235 | 256 | 285 | 276 | 471 |

Man erkennt, dass die hergestellten erfindungsgemäßen Formen oder Kerne ähnlich gute Eigenschaften aufweisen.

## Patentansprüche

1. Mischung
herstellbar durch umsetzen lassen einer Vormischung von
(av) 1,0 bis 50,0 Gewichtsprozent Methansulfonsäure
(bv) ein oder mehreren Estern von einer oder mehreren Phosphor-Sauerstoff-Säuren, wobei die Gesamtmenge an den besagten Estern im Bereich von 5,0 bis 90,0 Gewichtsprozent liegt, und
(cv) ein oder mehreren Silanen, ausgewählt aus der Gruppe bestehend aus Aminosilanen, Epoxysilanen, Mercaptosilanen und Ureidosilanen, wobei die Gesamtmenge an den besagten Silanen im Bereich von 5,0 bis 90,0 Gewichtsprozent liegt,
wobei der Anteil an Wasser maximal 0,1 Gewichtsprozent beträgt wobei die Gewichtsprozentangaben bezogen sind auf die Gesamtmenge der Bestandteile (av), (bv) und (cv) in der Vormischung.

2. Mischung nach Anspruch 1, wobei
die Gesamtmenge an Methansulfonsäure in der Mischung bzw. Vormischung im Bereich von 3,0 bis 40,0 Gewichtsprozent liegt, besonders bevorzugt im Bereich von 5,5 bis 35,0 Gewichtsprozent, bezogen auf die Gesamtmenge der Bestandteile (av), (bv) und (cv) in der Vormischung
und/oder
die Gesamtmenge an dem einen oder den mehreren Estern von einer oder mehreren Phosphor-Sauerstoff-Säuren in der Mischung bzw. Vormischung im Bereich von 10,0 bis 80,0 Gewichtsprozent liegt, besonders bevorzugt im Bereich von 15,0 bis 70,0 Gewichtsprozent, bezogen auf die Gesamtmenge der Bestandteile (av), (bv) und (cv) in der Vormischung
und/oder
die Gesamtmenge an dem einen oder den mehreren Silanen in der Mischung bzw. Vormischung im Bereich von 10,0 bis 85,0 Gewichtsprozent liegt, besonders bevorzugt im Bereich von 15,0 bis 80,0 Gewichtsprozent, bezogen auf die Gesamtmenge der Bestandteile (av), (bv) und (cv) der Vormischung und/oder
die Gesamtmenge an Bestandteilen (av), (bv) und (cv) in der Vormischung 90 Gewichtsprozent oder mehr beträgt, vorzugsweise 95 Gewichtsprozent oder mehr, bezogen auf die Gesamtmenge der Vormischung.

3. Mischung nach einem der vorangehenden Ansprüche, wobei
das Verhältnis der Masse von Bestandteil (av) zur Masse von Bestandteil (bv) in der Vormischung im Bereich von 0,05 bis 1,4 liegt, vorzugsweise im Bereich von 0,1 bis 1,3, besonders bevorzugt im Bereich von 0,13 bis 1,25 und/oder
das Verhältnis der Masse von Bestandteil (av) zur Masse von Bestandteil (cv) in der Vormischung im Bereich von 0,03 bis 1,6 liegt, vorzugsweise im Bereich von 0,05 bis 1,5, besonders bevorzugt im Bereich von 0,07 bis 1,45 und/oder
das Verhältnis der Masse von Bestandteil (bv) zur Masse von Bestandteil (cv) in der Vormischung im Bereich von 0,1 bis 4,0 liegt, vorzugsweise im Bereich von 0,15 bis 3,5, besonders bevorzugt im Bereich von 0,18 bis 3,35.

4. Mischung nach einem der vorangehenden Ansprüche,
wobei die Gesamtmenge an Estern der Phosphor-Sauerstoff-Säure in der Mischung bzw. Vormischung im Bereich von 5,0 bis 90,0 Gewichtsprozent liegt, bevorzugt im Bereich von 10,0 bis 80,0 Gewichtsprozent, besonders bevorzugt im Bereich von 15,0 bis 70,0 Gewichtsprozent
und/oder
wobei das oder zumindest eines der Silane ausgewählt ist aus der Gruppe bestehend aus Aminosilanen, Epoxysilanen, Mercaptosilanen und Ureidosilanen, wobei die Gesamtmenge an besagten Silanen in der Mischung bzw. Vormischung im Bereich von 5,0 bis 90,0 Gewichtsprozent liegt, bevorzugt im Bereich von 10,0 bis 85,0 Gewichtsprozent, besonders bevorzugt im Bereich von 15,0 bis 80,0 Gewichtsprozent,
wobei die Gewichtsprozentangaben jeweils bezogen sind auf die Gesamtmenge der Bestandteile (av), (bv) und (cv) in der Vormischung.

5. Mischung nach einem der vorangehenden Ansprüche, umfassend ein oder mehrere Lösungsmittel ausgewählt aus der Gruppe bestehend aus
- aromatische Kohlenwasserstoffe
- Fettsäurealkylester, vorzugsweise Rapsölmethylester
- Diester von Dicarbonsäuren, vorzugsweise Dibasicester
- Propylencarbonat
- Alkylsilikate, z.B. TEOS, Alkylsilikat-Oligomere und deren Gemische
wobei die Gesamtmenge der besagten Lösungsmittel in der Mischung vorzugsweise im Bereich von 0 bis 80 Gew.-% liegt, bevorzugt im Bereich von 10 bis 50 Gew.-%, bezogen auf die Gesamtmenge der Mischung.

6. Verwendung einer Mischung nach einem der vorangehenden Ansprüche als Additiv für die Polyisocyanat-Komponente und/oder Polyol-Komponente eines Zwei-Komponenten-Bindemittelsystems zur Herstellung eines Polyurethan-Harzes, vorzugsweise für die Polyisocyanat-Komponente eines Zwei-Komponenten-Bindemittelsystems zur Herstellung eines Polyurethan-Harzes zur Verwendung im Polyurethan-Cold-Box-Verfahren.

7. Polyisocyanat enthaltende Lösung zur Verwendung als Komponente eines Formstoff-Bindemittelsystems,
herstellbar durch Mischen von
(I) einem oder mehreren Polyisocyanaten mit jeweils zwei oder mehr Isocyanat-Gruppen im Molekül, wobei vorzugsweise das eine Polyisocyanat oder zumindest eines der mehreren Polyisocyanate ein Methylendiphenyldiisocyanat oder dessen Oligomer oder Polymer ist,
oder
einer polyisocyanathaltigen Vormischung umfassend ein oder mehrere Polyisocyanate mit jeweils zwei oder mehr Isocyanat-Gruppen im Molekül, wobei vorzugsweise das eine Polyisocyanat oder zumindest eines der mehreren Polyisocyanate ein Methylendiphenyldiisocyanat oder dessen Oligomer oder Polymer ist,
mit
(II) einer Gesamtmenge von 0,1 bis 10,0 Gew.-%, vorzugsweise 0,1 bis 5,0 Gew.-% einer Mischung nach einem der Ansprüche 1 bis 5,
wobei die Gewichtsprozentangaben bezogen sind auf die Gesamtmenge der Polyisocyanat enthaltenden Lösung.

8. Polyisocyanat enthaltende Lösung nach Anspruch 7, wobei
die Gesamtmenge an Methansulfonsäure in der Polyisocyanat enthaltenden Lösung im Bereich von 0,003 bis 4,000 Gewichtsprozent liegt, besonders bevorzugt im Bereich 0,0055 bis 3,500 Gewichtsprozent, bezogen auf die Gesamtmenge der Polyisocyanat enthaltenden Lösung
und/oder
die Gesamtmenge an dem einen oder den mehreren Estern von einer oder mehreren Phosphor-Sauerstoff-Säuren in der Polyisocyanat enthaltenden Lösung im Bereich von 0,01 bis 8,0 Gewichtsprozent liegt, besonders bevorzugt im Bereich von 0,015 bis 7,0 Gewichtsprozent, bezogen auf die Gesamtmenge der Polyisocyanat enthaltenden Lösung
und/oder
die Gesamtmenge an dem einen oder den mehreren Silanen in der Polyisocyanat enthaltenden Lösung im Bereich von 0,01 bis 8,5 Gewichtsprozent liegt, besonders bevorzugt im Bereich von 0,015 bis 8,0 Gewichtsprozent, bezogen auf die Gesamtmenge der Polyisocyanat enthaltenden Lösung
und/oder
umfassend eine Gesamtmenge an Polyisocyanat im Bereich von 55 bis 95 Gew.-%, bezogen auf die Gesamtmasse der Polyisocyanat enthaltenden Lösung.

9. Polyisocyanat enthaltende Lösung nach Anspruch 7 oder 8, umfassend ein oder mehrere Lösungsmittel ausgewählt aus der Gruppe bestehend aus
- aromatische Kohlenwasserstoffe
- Fettsäurealkylester, vorzugsweise Rapsölmethylester
- Diester von Dicarbonsäuren, vorzugsweise Dibasicester
- Propylencarbonat
- Alkylsilikate, z.B. TEOS, Alkylsilikat-Oligomere und deren Gemische
wobei die Gesamtmenge der besagten Lösungsmittel vorzugsweise im Bereich von 44,9 bis 1 Gewichtsprozent liegt, bezogen auf die Gesamtmenge der Polyisocyanat enthaltenden Lösung.

10. Verwendung einer Polyisocyanat enthaltenden Lösung nach einem der vorangehenden Ansprüche 7 bis 9
- als Polyisocyanat-Komponente eines Zwei-Komponenten-Bindemittelsystems zur Herstellung eines Polyurethan-Harzes, vorzugsweise als Polyisocyanat-Komponente eines Zwei-Komponenten-Bindemittelsystems zur Herstellung eines Polyurethan-Harzes im Polyurethan-Cold-Box-Verfahren
- zur Herstellung von Gießerei-Sandkernen oder -formen nach dem Cold-Box-Verfahren
und/oder
- zur Herstellung eines Polyurethan-Harzes vorzugsweise im Polyurethan-Cold-Box-Verfahren.

11. Zwei-Komponenten-Bindemittelsystem zur Herstellung eines Polyurethan-Harzes für die Gießerei, bestehend aus
- einer Polyisocyanat enthaltenden Lösung wie in einem der Ansprüche 7 bis 9 definiert als Polyisocyanat-Komponente,
und separat
- einer Polyol-Komponente, wobei die Polyol-Komponente vorzugsweise ein Phenol-Formaldehydharz mit zwei oder mehr Methylolgruppen pro Molekül umfasst, besonders bevorzugt ein Benzyletherharz mit ortho-ortho-Strukturen.

12. Verwendung eines Zwei-Komponenten-Bindemittelsystems nach Anspruch 11
- zur Herstellung von Gießerei-Sandkernen oder -formen nach dem Cold-Box-Verfahren
und/oder
- zur Herstellung eines Polyurethan-Harzes vorzugsweise im Polyurethan-Cold-Box-Verfahren.

13. Gemisch zur Herstellung eines Kerns oder einer Form für die Gießerei, umfassend
- einen Formgrundstoff
sowie
entweder
- die Komponenten eines Zwei-Komponenten-Bindemittelsystems nach Anspruch 11
oder
- eine Polyisocyanat-Komponente und eine Polyolkomponente eines Zwei-Komponenten-Bindemittelsystems sowie eine Mischung nach einem der Ansprüche 1 bis 6.

14. Form oder Kern für die Gießerei,
- umfassend einen Formgrundstoff sowie das aus der Härtung eines Zwei-Komponenten-Bindemittelsystems nach Anspruch 11 resultierende gehärtete Bindemittelsystem
oder
- herstellbar durch Formen eines Gemischs umfassend einen Formgrundstoff sowie die Komponenten eines Zwei-Komponenten-Bindemittelsystems nach Anspruch 11 und Härten des Bindemittelsystems in dem geformten Gemisch zu einem gehärteten Bindemittelsystem.

15. Verfahren zur Herstellung eines Kerns oder einer Form für die Gießerei, vorzugsweise nach dem Polyurethan-Cold-Box-Verfahren, mit folgenden Schritten:
- Vermischen eines Formgrundstoffs mit den Komponenten eines Zwei-Komponenten-Bindemittelsystems nach Anspruch 11,
- Formen des resultierenden Gemisches umfassend Formgrundstoff und die Komponenten des Bindemittelsystems,
- Kontaktieren des resultierenden geformten Gemisches mit einem gasförmigen Katalysator, vorzugsweise mit einem gasförmigen Amin, so dass das Bindemittelsystem härtet und den Formgrundstoff bindet.

## Claims

1. Mixture
preparable by allowing the reaction of a premixture of
(av) 1.0 - 50.0 wt% methanesulfonic acid;
(bv) one or more esters of one or more phosphorous-oxygen acids, wherein the total quantity of said esters is in the range 5.0 - 90.0 wt%, and
(cv) one or more silanes, selected from the group consisting of amino silanes, epoxy silanes, mercapto silanes and ureido silanes, wherein the total quantity of said silanes is in the range 5.0 - 90.0 wt%,
wherein the proportion of water is a maximum of 0.1 wt%,
wherein the wt% information relates to the total quantity of ingredients (av), (bv) and (cv) in the premixture.

2. Mixture according to claim 1, wherein
the total quantity of methanesulfonic acid in the mixture or premixture is in the range 3.0 - 40.0 wt%, particularly preferably in the range 5.5 - 35.0 wt%, with regard to the total quantity of ingredients (av), (bv) and (cv) in the premixture and/or
the total quantity of the one or more esters of one or more phosphorous-oxygen acids in the mixture or premixture is in the range 10.0 - 80.0 wt%, particularly preferably in the range 15.0 - 70.0 wt%, with regard to the total quantity of ingredients (av), (bv) and (cv) in the premixture
and/or
the total quantity of the one or more silanes in the mixture or premixture is in the range 10.0 - 85.0 wt%, particularly preferably in the range 15.0 - 80.0 wt%, with regard to the total quantity of ingredients (av), (bv) and (cv) in the premixture.
and/or
the total quantity of ingredients (av), (bv) and (cv) in the premixture is 90 wt% or more, preferably 95 wt% or more, with regard to the total quantity of the premixture.

3. Mixture according to one of the above claims, wherein
the mass ratio of ingredient (av) to ingredient (bv) in the premixture is in the range 0.05 - 1.4, in particular in the range 0.1 - 1.3, particularly preferably in the range 0.13 - 1.25
and/or
the mass ratio of ingredient (av) to ingredient (cv) in the premixture is in the range 0.03 - 1.6, in particular in the range 0.05 - 1.5, particularly preferably in the range 0.07 - 1.45
and/or
the mass ratio of ingredient (bv) to ingredient (cv) in the premixture is in the range 0.1 - 4.0, in particular in the range 0.15 - 3.5, particularly preferably in the range 0.18-3.35.

4. Mixture according to one of the above claims,
wherein the total quantity of esters of the phosphorous-oxygen acid in the mixture or premixture is in the range 5.0 - 90.0 wt%, preferably in the range 10.0 - 80.0 wt%, particularly preferably in the range 15.0 - 70.0 wt%
and/or
wherein the or at least one of the silanes is selected from the group consisting of amino silanes, epoxy silanes, mercapto silanes and ureido silanes, wherein the total quantity of said silanes in the mixture or premixture is in the range 5.0 - 90.0 wt%, preferably in the range 10.0 - 85.0 wt%, particularly preferably in the range 15.0 - 80.0 wt%,
wherein the wt% information in each case relates to the total quantity of ingredients (av), (bv) and (cv) in the premixture.

5. Mixture according to one of the above claims, comprising one or more solvents selected from the group consisting of
- aromatic hydrocarbons;
- fatty acid alkyl esters, in particular rapeseed oil methyl ester;
- diesters of dicarboxylic acids, in particular dibasic esters;
- propylene carbonate;
- alkyl silicates, e.g. TEOS, alkyl silicate oligomers and mixtures thereof,
wherein the total quantity of said solvent in the mixture in particular is in the range 0 - 80 wt%, preferably in the range 10 - 50 wt%, with regard to the total quantity of the mixture.

6. Use of a mixture according to one of the above claims as an additive for the polyisocyanate component and/or polyol component of a two-component binding agent system for preparation of a polyurethane resin, in particular for the polyisocyanate component of a two-component binding agent system for preparation of a polyurethane resin for use in the polyurethane cold-box method.

7. Solution containing polyisocyanate for use as a component of a molding material binding agent system,
preparable by mixing
(I) one or more polyisocyanates with in each case two or more isocyanate groups in the molecule, wherein in particular the one polyisocyanate or at least one of the more polyisocyanates is a methylene diphenyl diisocyanate or an oligomer or polymer thereof,
or
a premixture containing polyisocyanate comprising one or more polyisocyanates with in each case two or more isocyanate groups in the molecule, wherein in particular the one polyisocyanate or at least one of the more polyisocyanates is a methylene diphenyl diisocyanate or an oligomer or polymer thereof,
with
(II) a total quantity of 0.1 - 10.0 wt%, in particular 0.1 - 5.0 wt% of a mixture according to one of claims 1 - 5,
wherein the wt% information relates to the total quantity of solution containing polyisocyanate.

8. Solution containing polyisocyanate according to claim 7, wherein
the total quantity of methanesulfonic acid in the solution containing polyisocyanate is in the range 0.003 - 4.000 wt%, particularly preferably is in the range 0.0055 - 3.500 wt%, with regard to the total quantity of the solution containing polyisocyanate
and/or
the total quantity of the one or more esters of one or more phosphorous-oxygen acids in the solution containing polyisocyanate is in the range 0.01 - 8.0 wt%, particularly preferably in the range 0.015 - 7.0 wt%, with regard to the total quantity of solution containing polyisocyanate
and/or
the total quantity of the one or more silanes in the solution containing polyisocyanate is in the range 0.01 - 8.5 wt%, particularly preferably in the range 0.015 - 8.0 wt%, with regard to the total quantity of solution containing polyisocyanate
and/or
comprising a total quantity of polyisocyanate in the range 55 - 95 wt%, with regard to the total mass of the solution containing polyisocyanate.

9. Solution containing polyisocyanate according to claim 7 or 8, comprising one or more solvents selected from the group consisting of
- aromatic hydrocarbons;
- fatty acid alkyl esters, in particular rapeseed oil methyl ester;
- diesters of dicarboxylic acids, in particular dibasic ester;
- propylene carbonate;
- alkyl silicates, e.g. TEOS, alkyl silicate oligomers and mixtures thereof,
wherein the total quantity of said solvent is in particular in the range 44.9 - 1 wt%, with regard to the total quantity of solution containing polyisocyanate.

10. Use of a solution containing polyisocyanate according to one of the above claims 7 to 9
- as the polyisocyanate component of a two-component binding agent system for preparation of a polyurethane resin, in particular as the polyisocyanate component of a two-component binding agent system for preparation of a polyurethane resin using the polyurethane cold-box method
- for the preparation of foundry sand cores or molds according to the cold-box method
and/or
- for production of a polyurethane resin in particular using the polyurethane cold-box method.

11. Two-component binding agent system for preparation of a polyurethane resin for casting, consisting of
- a solution containing polyisocyanate as defined in one of claims 7 to 9 as the polyisocyanate component,
and separately
- a polyol component, wherein the polyol component in particular comprises a phenol-formaldehyde resin with two or more methylol groups per molecule, particularly preferably a benzyl ether resin with ortho-ortho structures.

12. Use of a two-component binding agent system according to claim 11
- for the preparation of foundry sand cores or molds according to the cold-box method
and/or
- for production of a polyurethane resin in particular using the polyurethane cold-box method.

13. Mixture for production of a foundry core or mold, comprising
- a molding matrix
and
either
- the components of a two-component binding agent system according to claim 11
or
- a polyisocyanate component and a polyol component of a two-component binding agent system and a mixture according to one of claims 1 to 6.

14. Mold or core for casting,
- comprising a molding matrix and the hardened binding agent system resulting from the hardening of a two-component binding agent system according to claim 11
or
- producible by molding a mixture comprising a molding matrix and the components of a two-component binding agent system according to claim 11 and hardening of the binding agent system in the molded mixture to form a hardened binding agent system.

15. Method for production of a foundry core or mold, in particular according to the polyurethane-cold-box method, with the following steps:
- mixing of a molding matrix with the components of a two-component binding agent system according to claim 11;
- molding of the resultant mixture comprising molding matrix and the components of the binding agent system;
- bringing the resultant molded mixture into contact with a gaseous catalyst, in particular with a gaseous amine, so that the binding agent system hardens and binds the molding matrix.

## Revendications

1. Mélange
pouvant être fabriqué en laissant réagir un prémélange
(av) de 1,0 à 50,0 % en poids d'acide méthane sulfonique
(bv) d'un ou de plusieurs esters d'un ou de plusieurs acides de phosphore-oxygène, la quantité totale en lesdits esters étant située dans la plage allant de 5,0 à 90,0 % en poids, et
(cv) d'un ou de plusieurs silanes, choisis parmi le groupe constitué des aminosilanes, des sinales époxy, des mercaptosilanes et des uréidosilanes, la quantité totale en lesdites silanes étant située dans la plage allant de 5,0 à 90,0 % en poids,
la proportion en eau étant égale au maximum à 0,1 % en poids,
les indications en % en poids se référant à la quantité totale des constituants (av), (bv) et (cv) dans le prémélange.

2. Mélange selon la revendication 1,
la quantité totale en acide méthane sulfonique dans le mélange ou le prémélange se situant dans la plage allant de 3,0 à 40,0 % en poids, de manière particulièrement préférée dans la plage allant de 5,5 à 35,0 % en poids, par rapport à la quantité totale des constituants (av), (bv) et (cv) dans le prémélange,
et/ou
la quantité totale en l'ester ou les nombreux esters d'un ou de plusieurs acides de phosphore-oxygène dans le mélange ou le prémélange se situant dans la plage allant de 10,0 à 80,0 % en poids, de manière particulièrement préférée dans la plage allant de 15,0 à 70,0 % en poids, par rapport à la quantité totale des constituants (av), (bv) et (cv) dans le prémélange
et/ou
la quantité totale en le silane ou les nombreux silanes dans le mélange ou dans le prémélange se situant dans la plage allant de 10,0 à 85,0 % en poids, en particulier de manière préférée dans la plage allant de 15,0 à 80,0 % en poids, par rapport à la quantité totale des constituants (av), (bv) et (cv) du prémélange
et/ou
la quantité totale des constituants (av), (bv) et (cv) dans le prémélange représentant 90 % en poids ou plus, de préférence 95 % en poids ou plus par rapport à la quantité totale du prémélange.

3. Mélange selon l'une quelconque des revendications précédentes,
le rapport de la masse du constituant (av) par rapport à la masse du constituant (bv) dans le prémélange se situant dans la plage allant de 0,05 à 1,4, de préférence dans la plage allant de 0,1 à 1,3, de manière particulièrement préférée dans la plage allant de 0,13 à 1,25
et/ou
le rapport de la masse du constituant (av) par rapport à la masse du constituant (cv) dans le prémélange se situant dans la plage allant de 0,03 à 1,6, de préférence dans la zone allant de 0,05 à 1,5, de manière particulièrement préférée dans la plage allant de 0,07 à 1,45
et/ou
le rapport de la masse du constituant (bv) par rapport à la masse du constituant (cv) dans le prémélange se situant dans la plage allant de 0,1 à 4,0, de préférence dans la plage allant de 0,15 à 3,5, de manière particulièrement préférée dans la plage allant de 0,18 à 3,35.

4. Mélange selon l'une quelconque des revendications précédentes,
la quantité totale en esters de l'acide de phosphore-d'oxygène dans le mélange ou le prémélange se situant dans la plage allant de 5,0 à 90,0 % en poids, de manière préférée dans la plage allant de 10,0 à 80,0 % en poids, de manière particulièrement préférée dans la plage allant de 15,0 à 70,0 % en poids,
et/ou
le silane ou au moins un des silanes étant choisi parmi le groupe constitué des aminosilanes, des silanes époxy, des mercaptosilanes et des uréidosilanes, la quantité totale desdites silanes dans le mélange ou prémélange se situant dans la plage allant de 5,0 à 90,0 % en poids, de manière préférée dans la plage allant de 10,0 à 85,0 % en poids, de manière particulièrement préférée dans la plage allant de 15,0 à 80,0 % en poids,
les indications de % en poids se rapportant respectivement à la quantité totale des constituants (av), (bv) et (cv) dans le prémélange.

5. Mélange selon l'une quelconque des revendications précédentes, comprenant un ou plusieurs solvants choisis parmi le groupe constitué :
- des hydrocarbures aromatiques,
- des esters alkyliques d'acide gras, de préférence des esters méthyliques de colza,
- des diesters d'acide dicarboxylique, de préférence des esters dibasiques,
- du carbonate de propylène,
- des silicates d'alkyle, par exemple des TEOS (tétraéthylorthosilicate), des oligomères de silicate d'alkyle et de leurs mélanges,
la quantité totale desdits solvants dans le mélange se situant de préférence dans la plage allant de 0 à 80 % en poids, de manière préférée dans la plage allant de 10 à 50 % en poids par rapport à la quantité totale du mélange.

6. Utilisation d'un mélange selon l'une quelconque des revendications précédentes, en tant qu'additif pour les composants de polyisocyanate et/ou les composants de polyol d'un système de liant à deux composants pour fabriquer une résine de polyuréthane, de préférence pour les composants de polyisocyanate d'un système de liant à deux composants pour fabriquer une résine de polyuréthane destinée à être utilisée dans le procédé à boîte froide à base de polyuréthane.

7. Solution contenant du polyisocyanate destinée à être utilisée comme composant d'un système de liant de substance de moulage,
pouvant être fabriquée en mélangeant
(I) un ou plusieurs polyisocyanates à respectivement deux groupes d'isocyanate ou plus dans la molécule, de préférence l'un des polyisocyanates ou au moins un des nombreux polyisocyanates étant un diisocyanate de méthylènediphényle ou son oligomère ou polymère,
ou
un prémélange contenant un polyisocyanate, comprenant un ou plusieurs polyisocyanates, à respectivement deux groupes d'isyocyanate ou plus dans la molécule, de préférence l'un des polyisocyanates ou au moins un des nombreux polyisocyanates étant un diisocyanate de méthylènediphényle ou son oligomère ou polymère
avec
(II) une quantité totale allant de 0,1 à 10,0 % en poids, de préférence allant de 0,1 à 5,0 % en poids d'un mélange selon l'une quelconque des revendications 1 à 5,
les indications de % en poids se rapportant à la quantité totale de la solution contenant du polyisocyanate.

8. Solution contenant du polyisocyanate selon la revendication 7,
la quantité totale en acide de méthane sulfonique dans la solution contenant du polyisocyanate se situant dans la plage allant de 0,003 à 4,000 % en poids, de manière particulièrement préférée dans la plage allant de 0,0055 à 3,500 % en poids, par rapport à la quantité totale de la solution contenant du polyisocyanate
et/ou
la quantité totale en l'un des esters ou en de nombreux esters d'un ou de plusieurs acides de phosphore-oxygène dans la solution contenant du polyisocyanate se situant dans la plage allant de 0,01 à 8,0 % en poids, de manière particulièrement préférée dans la plage allant de 0,015 à 7,0 % en poids, par rapport à la quantité totale de la solution contenant du polyisocyanate,
et/ou
la quantité totale en l'un des silanes en les nombreux silanes dans la solution contenant du polyisocyanate se situant dans la plage allant de 0,01 à 8,5 % en poids, de manière particulièrement préférée dans la plage allant de 0,015 à 8,0 % en poids, par rapport à la quantité totale de la solution contenant du polyisocyanate
et/ou
comprenant une quantité totale de polyisocyanate située dans la plage allant de 55 à 95 % en poids par rapport au poids total de la solution contenant du polyisocyanate.

9. Solution contenant du polyisocyanate selon la revendication 7 ou 8, comprenant un ou plusieurs solvants choisis parmi le groupe constitué :
- des hydrocarbures aromatiques,
- des esters alkyliques d'acide gras, de préférence des esters méthyliques de colza,
- des diesters d'acide dicarboxylique, de préférence des esters dibasiques,
- du carbonate de propylène,
- des silicates d'alkyle, par exemple des TEOS (tétraéthylorthosilicate), des oligomères de silicate d'alkyle et de leurs mélanges,
la quantité totale desdits solvants dans le mélange se situant de préférence dans la plage allant de 44,9 à 1 % en poids, par rapport à la quantité totale de la solution contenant du polyisocyanate.

10. Utilisation d'une solution contenant du polyisocyanate selon l'une quelconque des revendications précédentes 7 à 9,
- en tant que composant de polyisocyanate d'un système de liant à deux composants pour fabriquer une résine de polyuréthane, de préférence en tant que composant de polyisocyanate d'un système de liant à deux composants pour fabriquer une résine de polyuréthane dans le procédé à boîte froide à base de polyuréthane,
- pour fabriquer des noyaux ou moules de sable de fonderie selon le procédé à boîte froide,
et/ou
- pour fabriquer une résine de polyuréthane, de préférence dans le procédé à boîte froide à base de polyuréthane.

11. Système de liant à deux composants pour fabriquer une résine de polyuréthane pour la fonderie, constitué
- d'une solution contenant du polyisocyanate telle que définie dans l'une quelconque des revendications 7 à 9 en tant que composant de polyisocyanate,
et séparément
- d'un composant de polyol, le composant de polyol comprenant de préférence une résine phénol-formaldéhyde pourvue de deux groupes méthylol ou plus par molécule, de manière particulièrement préférée une résine de benzyl-éther pourvue de structures ortho-ortho.

12. Utilisation d'un système de liant à deux composants selon la revendication 11
- pour fabriquer des noyaux ou moules de sable de fonderie selon le procédé à boîte froide,
et/ou
- pour fabriquer une résine de polyuréthane de préférence dans le procédé à boîte froide.

13. Mélange pour fabriquer un noyau ou un moule pour la fonderie, comprenant
- une matière de base de moulage
ainsi que
soit
- les composants d'un système de liant à deux composants selon la revendication 11
ou
- un composant de polyisocyanate et un composant polyol d'un système de liant à deux composants ainsi qu'un mélange selon l'une quelconque des revendications 1 à 6.

14. Moule ou noyau pour la fonderie
- comprenant une matière de base de moulage ainsi que le système de liant durci résultant de la trempe d'un système de liant à deux composants selon la revendication 11
ou
- pouvant être fabriqué par le moulage d'un mélange comprenant une matière de base de moulage ainsi que les composants d'un système de liant à deux composants selon la revendication 11 et par la trempe du système de liant dans le mélange moulé pour former un système de liant durci.

15. Procédé pour fabriquer un noyau ou un moule pour la fonderie, de préférence selon le procédé à boîte froide, comprenant les étapes suivantes consistant à :
- mélanger une matière de base de moulage aux composants d'un système de liant à deux composants selon la revendication 11,
- mouler le mélange résultant comprenant la substance de base de moulage et les composants du système de liant,
- mettre en contact le mélange moulé résultant avec un catalyseur gazeux, de préférence avec une amine gazeuse, de sorte que le système de liant durcisse et lie la matière de base de moulage.
